# EUROPEAN PATENT SPECIFICATION

(11) **EP 4 058 895 B1**
(45) Date of publication and mention of the grant of the patent: **10.06.2026**
(21) Application number: 19952158.4
(22) Date of filing: 12.11.2019
(51) Int. Cl.: G06F 13/00, H04L 65/10

(54) **ALERTING A DEVICE THAT SHARES AN IDENTITY WITH ANOTHER DEVICE BASED ON USER CONFIGURATION**
ALARMIEREN EINER VORRICHTUNG, DIE EINE IDENTITÄT MIT EINER ANDEREN VORRICHTUNG TEILT, BASIEREND AUF DER BENUTZERKONFIGURATION
ALERTE D'UN DISPOSITIF QUI PARTAGE UNE IDENTITÉ AVEC UN AUTRE DISPOSITIF SUR LA BASE D'UNE CONFIGURATION D'UTILISATEUR

(43) Date of publication of application: 21.09.2022
(73) Proprietor: Vivo Mobile Communication Co., Ltd., Dongguan, Guangdong 523863 (CN)
(72) Inventor: YANCHAO, Kang, Beijing 100191 (CN); BUCKLEY, Adrian, Tracy, CA 95376 (US)
(74) Representative: Conti, Marco
(86) International application number: PCT/CN2019/117501
(87) International publication number: WO 2021/092756

(56) References cited:
- EP-A1- 2 837 216
- EP-A1- 3 051 826
- EP-A2- 2 481 227
- EP-B1- 2 481 227
- EP-B1- 2 837 216
- CN-A- 102 118 854
- CN-A- 108 513 303
- US-A1- 2002 077 102
- US-A1- 2015 142 959

## Description

### TECHNICAL FIELD

This disclosure relates generally to alerting a device of an incoming communication in a wireless communication system. More specifically, alerting a device that shares an identity with another device based on user configuration.

### BACKGROUND

Recently, a wireless communication system introduced a new technology that allows user identity to be shared across multiple devices, e.g., user equipment (UE) such as mobile phone, smartphone, tablet, smartwatch, etc. The identity could be personal identity or one associated with work. The system allows an incoming communication (e.g., audio call, textual call, or video call) to be received and delivered to all the devices sharing the identity. The system provides an alert on all the devices regardless of the conditions surrounding the device. The system does not accommodate any user preferences.

The above-described background on alerting incoming communication on multiple devices is merely intended to provide a contextual overview of some current issues, and is not intended to be exhaustive (e.g., although problems and solution are directed to next generation networks such as 5G, the solutions can be applied to 4G/LTE technologies). Other contextual information may become further apparent upon review of the following detailed description.

US2002/077102A1 discloses alerting a device that shares an identity with another device based on user configuration. EP 2481227 A2 discloses subscriber identification management broker for fixed/mobile networks. EP 2837216A1 discloses short message service mobile originated/mobile terminated without Mobile Station International Subscriber Directory Number (MSISDN) in Internet Protocol Multimedia Subsystem (IMS).

### BRIEF DESCRIPTION OF THE DRAWINGS

Non-limiting and non-exhaustive embodiments of the subject disclosure are described with reference to the following figures, wherein like reference numerals refer to like parts throughout the various views unless otherwise specified.
FIG. 1 illustrates an example wireless communication system in which a network node device and user equipment (UE) can implement various aspects and embodiments of the subject disclosure.
FIG. 2 illustrates a non-limiting example of information flow between one or more devices communicatively operating in a wireless communication system in accordance with one or more embodiments.
FIG. 3 illustrates a non-limiting example of information flow between one or more devices communicatively operating in a wireless communication system in accordance with one or more embodiments.
FIG. 4 illustrates a non-limiting example of registration flow between a UE and one or more network nodes that are communicatively operating in a wireless communication system in accordance with one or more embodiments.
FIG. 5 illustrates a non-limiting example of registration flow between a UE and one or more network nodes that are communicatively operating in a wireless communication system in accordance with one or more embodiments.
FIG. 6 illustrates a non-limiting example of registration flow between a UE and one or more network nodes that are communicatively operating in a wireless communication system in accordance with one or more embodiments.
FIG. 7 depicts a diagram of an example, non-limiting computer implemented method that facilitates alerting a device that shares an identity with another device based on user configuration in accordance with one or more embodiments described herein.
FIG. 8 depicts a diagram of an example, non-limiting computer implemented method that facilitates alerting a device that shares an identity with another device based on user configuration in accordance with one or more embodiments described herein.
FIG. 9 depicts a diagram of an example, non-limiting computer implemented method that facilitates alerting a device that shares an identity with another device based on user configuration in accordance with one or more embodiments described herein.
FIG. 10 depicts a diagram of an example, non-limiting computer implemented method that facilitates alerting a device that shares an identity with another device based on user configuration in accordance with one or more embodiments described herein.
FIG. 11 depicts a diagram of an example, non-limiting computer implemented method that facilitates alerting a device that shares an identity with another device based on user configuration in accordance with one or more embodiments described herein.
FIG. 12 depicts a diagram of an example, non-limiting computer implemented method that facilitates alerting a device that shares an identity with another device based on user configuration in accordance with one or more embodiments described herein.
FIG. 13 depicts a diagram of an example, non-limiting computer implemented method that facilitates alerting a device that shares an identity with another device based on user configuration in accordance with one or more embodiments described herein.
FIG. 14 depicts a diagram of an example, non-limiting computer implemented method that facilitates alerting a device that shares an identity with another device based on user configuration in accordance with one or more embodiments described herein.
FIG. 15 illustrates an example block diagram of an example mobile handset operable to engage in a system architecture that facilitates wireless communications according to one or more embodiments described herein.
FIG. 16 illustrates an example block diagram of an example computer operable to engage in a system architecture that facilitates secure wireless communication according to one or more embodiments described herein.

### DETAILED DESCRIPTION

In the following description, numerous specific details are set forth to provide a thorough understanding of various embodiments. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment," or "an embodiment," means that a particular feature, structure, or characteristic described in connection with the embodiment is included in at least one embodiment. Thus, the appearances of the phrase "in one embodiment," "in one aspect," or "in an embodiment," in various places throughout this specification are not necessarily all referring to the same embodiment. Furthermore, the particular features, structures, or characteristics may be combined in any suitable manner in one or more embodiments.

As utilized herein, terms "component," "system," "interface," and the like are intended to refer to a computer-related entity, hardware, software (e.g., in execution), and/or firmware. For example, a component can be a processor, a process running on a processor, an object, an executable, a program, a storage device, and/or a computer. By way of illustration, an application running on a server and the server can be a component. One or more components can reside within a process, and a component can be localized on one computer and/or distributed between two or more computers.

Further, these components can execute from various machine-readable media having various data structures stored thereon. The components can communicate via local and/or remote processes such as in accordance with a signal having one or more data packets (e.g., data from one component interacting with another component in a local system, distributed system, and/or across a network, e.g., the Internet, a local area network, a wide area network, etc. with other systems via the signal).

As another example, a component can be an apparatus with specific functionality provided by mechanical parts operated by electric or electronic circuitry; the electric or electronic circuitry can be operated by a software application or a firmware application executed by one or more processors; the one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components. In an aspect, a component can emulate an electronic component via a virtual machine, e.g., within a cloud computing system.

The words "exemplary" and/or "demonstrative" are used herein to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent exemplary structures and techniques known to those of ordinary skill in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

As used herein, the term "infer" or "inference" refers generally to the process of reasoning about, or inferring states of, the system, environment, user, and/or intent from a set of observations as captured via events and/or data. Captured data and events can include user data, device data, environment data, data from sensors, sensor data, application data, implicit data, explicit data, etc. Inference can be employed to identify a specific context or action or can generate a probability distribution over states of interest based on a consideration of data and events, for example.

Inference can also refer to techniques employed for composing higher-level events from a set of events and/or data. Such inference results in the construction of new events or actions from a set of observed events and/or stored event data, whether the events are correlated in close temporal proximity, and whether the events and data come from one or several event and data sources. Various classification schemes and/or systems (e.g., support vector machines, neural networks, expert systems, Bayesian belief networks, fuzzy logic, and data fusion engines) can be employed in connection with performing automatic and/or inferred action in connection with the disclosed subject matter.

In addition, the disclosed subject matter can be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, machine-readable device, computer-readable carrier, computer-readable media, or machine-readable media. For example, computer-readable media can include, but are not limited to, a magnetic storage device, e.g., hard disk; floppy disk; magnetic strip(s); an optical disk (e.g., compact disk (CD), a digital video disc (DVD), a Blu-ray Disc^{™} (BD)); a smart card; a flash memory device (e.g., card, stick, key drive); and/or a virtual device that emulates a storage device and/or any of the above computer-readable media.

The present invention is defined by the subject-matter of the independent claims. Further detailed embodiments are defined in the dependent claims. As an overview, various embodiments are described herein to facilitate alerting a device that shares an identity with another device based on user configuration. For simplicity of explanation, the methods (or algorithms) are depicted and described as a series of acts. It is to be understood and appreciated that the various embodiments are not limited by the acts illustrated and/or by the order of acts. For example, acts can occur in various orders and/or concurrently, and with other acts not presented or described herein. Furthermore, not all illustrated acts may be required to implement the methods. In addition, the methods could alternatively be represented as a series of interrelated states via a state diagram or events. Additionally, the methods described hereafter are capable of being stored on an article of manufacture (e.g., a machine-readable storage medium) to facilitate transporting and transferring such methodologies to computers. The term article of manufacture, as used herein, is intended to encompass a computer program accessible from any computer-readable device, carrier, or media, including a non-transitory machine-readable storage medium.

It should be noted that although various aspects and embodiments have been described herein in the context of 5G, Universal Mobile Telecommunications System (UMTS), and/or Long-Term Evolution (LTE), or other next generation networks, the disclosed aspects are not limited to 5G, a UMTS implementation, and/or an LTE implementation as the techniques can also be applied in 3G, 4G or other LTE systems. For example, aspects or features of the disclosed embodiments can be exploited in substantially any wireless communication technology. Such wireless communication technologies can include UMTS, Code Division Multiple Access (CDMA), Wi-Fi, Worldwide Interoperability for Microwave Access (WiMAX), General Packet Radio Service (GPRS), Enhanced GPRS, Third Generation Partnership Project (3GPP), LTE, Third Generation Partnership Project 2 (3GPP2) Ultra Mobile Broadband (UMB), High Speed Packet Access (HSPA), Evolved High Speed Packet Access (HSPA+), High-Speed Downlink Packet Access (HSDPA), High-Speed Uplink Packet Access (HSUPA), Zigbee, or another IEEE 802.XX technology, Satellite technologies etc. Additionally, substantially all aspects disclosed herein can be exploited in legacy telecommunication technologies.

Described herein are systems, methods, and articles of manufacture that can alerting a device that shares an identity with another device based on user configuration. Facilitating alerting an incoming communication (e.g., an incoming call, incoming video call through various apps, textual message, etc.) can be implemented in connection with any type of device with a connection to the communications network (e.g., a communication device, a mobile handset, a smartwatch, a smartphone, a computer, a handheld device, etc.) any Internet of Things (IoT) device (e.g., toaster, coffee maker, blinds, music players, speakers, etc.), and/or any connected vehicles (cars, airplanes, space rockets, and/or other at least partially automated vehicles (e.g., drones)). In some embodiments the non-limiting terms such as user equipment (UE) or mobile equipment (ME) are used interchangeably to describe a communication device that operates in a communication network. It can refer to any type of wireless device that communicates with a radio network node in a cellular or mobile communication system. Examples of UE are target device, device to device (D2D) UE, machine type UE or UE capable of machine to machine (M2M) communication, PDA, Tablet, mobile terminals, smart phone, laptop embedded equipped (LEE), laptop mounted equipment (LME), USB dongles, etc. Note that the terms element, elements and antenna ports can be interchangeably used but carry the same meaning in this disclosure. The embodiments are applicable to single carrier as well as to multicarrier (MC) or carrier aggregation (CA) operation of the UE. The term carrier aggregation (CA) is also called (e.g., interchangeably called) "multi-carrier system", "multi-cell operation", "multi-carrier operation", "multi-carrier" transmission and/or reception.

In some embodiments the non-limiting term radio, network node device, or simply network node is used. It can refer to any type of network node that serves UE is connected to other network nodes or network elements or any radio node from where UE receives a signal. Examples of radio network nodes are Node B, base station (BS), multistandard radio (MSR) node such as MSR BS, evolved Node B (eNB or eNodeB), next generation Node B (gNB or gNodeB), network controller, radio network controller (RNC), base station controller (BSC), relay, donor node controlling relay, base transceiver station (BTS), access point (AP), transmission points, transmission nodes, remote radio unit (RRU), remote radio head (RRH), nodes in distributed antenna system (DAS), relay device, network node, node device, etc.

Cloud radio access networks (RAN) can enable the implementation of concepts such as software-defined network (SDN) and network function virtualization (NFV) in 5G networks. This disclosure can facilitate a generic channel state information framework design for a 5G network. Certain embodiments of this disclosure can comprise an SDN controller (e.g., controller, central controller, or centralized unit) that can control routing of traffic within the network and between the network and traffic destinations. The SDN controller can be merged with the 5G network architecture to enable service deliveries via open application programming interfaces ("APIs") and move the network core towards an all internet protocol ("IP"), cloud based, and software driven telecommunications network. The SDN controller can work with or take the place of policy and charging rules function ("PCRF") network elements so that policies such as quality of service and traffic management and routing can be synchronized and managed end to end.

For brevity and simplicity, Table 1 describes abbreviations used to describe one or more aspect of the embodiments.

**Table 1 - Abbreviations**

| | |
|---|---|
| AMF | Access Management Function |
| AS | Application Server |
| EQID | Equipment ID |
| GERAN | GSM/EDGE Radio Access Network |
| GRUU | Global Routable UA URI |
| HLR | Home Location Register |
| HSS | Home Subscriber Server |
| LTE | Long Term Evolution |
| IARI | IMS Application Reference Identifier |
| I-CSCF | Interrogating Call Session Control Function |
| ICSI | IMSI Communication Service Identifier |
| IMEI | International Mobile Equipment Identitv |
| IMS | IP Multi-Media Subsystem |
| ME | Mobile Equipment |
| MMI | Man Machine Interface |
| MSISDN | Mobile Station ISDN |
| MUD | Multi Device and Multi Identity |
| NAS | Non Access Stratum |
| NG | Next Generation |
| PCF | Policy Control Function |
| P-CSCF | Proxy Call Session Control Function |
| PTMSI | Packet Temporary Mobile Subscriber Identity |
| PUI | Public User Identity |
| RAT | Radio Access Technology |
| S-CSCF | Serving Call Session Control Function |
| SUCI | Subscriber Concealed Identifier |
| TADS | Terminating Access Domain Selection |
| TMSI | Temporary Mobile Subscriber Identitv |
| UDM | Unified Data Management |
| UE | User Equipment |
| USSD | Unstructured Supplementary Service Data |
| UTRAN | UMTS Terrestrial Radio Access Network |
| VoLTE | Voice over LTE |
| WLAN | Wireless LAN |

An IMS is framework developed by 3GPP. It allows an operator to deploy numerous different services. It is used to provide Voice over LTE (VoLTE) and will also be used to provide voice over a 5G network. The basic architecture consists of: Proxy Call Session Control Function (P-CSCF) is first point of contact with the IMS subsystem from the UE. The P-CSCF maintains security association with the UE and performs policing of messages and other policy functions; the S-CSCF maintains session state, performs the registrar functions defined in RF 3261 [xx] and determines which AS to involve in a session; a interrogating CSCF (I-CSCF) is a contact point for terminating connections to a user. It queries HSS to see which S-CSCF the user is hosted on. For UE registration it is involved in assigning S-CSCF for the user; and AS executes the services in the IMS network, wherein some AS in a Service Continuity Control AS that determines how to route terminating calls. This routing function is called Terminating Access Domain Selection (TADS).

In some embodiments, the IMS has 2 identities. A Public User Identity and Private User Identity. The public user identity is known as the user (e.g., owner of the device). This identity can be provided to other parties/users so that the user can be contacted. A user may have many public user identities and they can be a Tel URI or SIP URI form. The private user identity is typically not known to the user and is used to identify subscription. In may have one or more public user identities associated with it. It may be used for authentication, authorization and accounting purposes.

Given a public user identity can be shared with many private user identities, there is a concept of appending an equipment identifier to the public user identity. This known as GURU. This allows UE to call a specific Public User ID at certain device.

In some embodiments, a Multi User Device (MUD) feature is implemented. The MUD is functionality allows a device (e.g., UE) to host multiple phone numbers (e.g., MSISDNs) form other devices. Thus, if a user has many devices, they can consolidate the numbers onto one device. A user can also choose which Calling Line ID to present to a called party (e.g. user can choose one the number as the caller ID). The user can also configure different ringtones for each of the number such that an allocated ringtone may be used for alerting the user.

A Non-Access Stratum (NAS) based signaling provides a transport of payload between the UE and the AMF. The type of the payload is identified by the Payload container type. The AMF can further transport the payload container to other network node or process the payload container locally according to the Payload container type. Two examples of the payload container are payload container for UE policy and payload container for steer of roaming. The payload container for UE policy involves the AMF transparently transport the payload container between the UE and PCF. The payload container for steer of roaming involves the AMF transparently transports the payload container between the UE and UDM.

An unstructured supplementary service data (USSD) functionality was developed that allows system to invoke services that where not supported in the UE (e.g., a UE might support features A-C that used specific service codes, or "*#" (e.g., star hash/pound) sequence. USSD allows a UE, if it did not recognize a *# sequence to send that sequence plus any associated data transparently to the network to be processed. The functionality was later expanded to allow binary data to be sent to and from the UE.

According to an embodiment, a system can comprise a processor and a memory that stores executable instructions that, when executed by the processor, facilitate performance of operations comprising receiving a first message, wherein the first message comprises an action assigned to devices associated with a user identity. The system can further comprise determining whether a request to establish a communication link with the user identity was received, and in response to the determining that the request to establish the communication link the user identity was received, performing the action assigned to the devices associated with the user identity.

According to an embodiment, a system can comprise a processor and a memory that stores executable instructions that, when executed by the processor, facilitate performance of operations comprising receiving a first message, wherein the first message comprises configuration parameters associated with a user identity. The system can further comprise receiving a request to establish a communication link with at least one device associated with the user identity, and performing an alert action indicated by the configuration parameters for all devices associated with the user identity.

According to an embodiment, a system can comprise a processor and a memory that stores executable instructions that, when executed by the processor, facilitate performance of operations comprising receiving, configuration parameters for devices associated with a user identity wherein the configuration parameters comprise an equipment type, a time period and an action type that indicates an action to execute for incoming communication requests associated with the user identity. The system can further comprise transmitting the configuration parameters to one or more network node.

According to another embodiment, described herein is a method that can comprise receiving, by a processor of a device, a first message, wherein the first message comprises an action assigned to devices associated with a user identity. The method can further comprise determining, by the device, whether a request to establish a communication link with the user identity was received; and in response to the determining that the request to establish the communication link the user identity was received, performing, by the device, the action assigned to the devices associated with the user identity.

According to another embodiment, described herein is a method that can comprise receiving, by a processor of a device, a first message, wherein the first message comprises configuration parameters associated with a user identity. The method can further comprise receiving, by the device, a request to establish a communication link with at least one device associated with the user identity; and performing an alert action indicated by the configuration parameters for all devices associated with the user identity.

According to another embodiment, described herein is a method that can comprise receiving, by a processor of a device, configuration parameters for devices associated with a user identity, wherein the configuration parameters comprise an equipment type, a time period and an action type that indicates an action to execute for incoming communication requests associated with the user identity. The method can further comprise transmitting, by the device, the configuration parameters to one or more network node.

According to yet another embodiment, a device can comprise a processor and a memory that stores executable instructions that, when executed by the processor, facilitate performance of operations comprising receiving a first message, wherein the first message comprises an action assigned to devices associated with a user identity. The device can further comprise determining whether a request to establish a communication link with the user identity was received, and in response to the determining that the request to establish the communication link the user identity was received, performing the action assigned to the devices associated with the user identity.

According to yet another embodiment, a device can comprise a processor and a memory that stores executable instructions that, when executed by the processor, facilitate performance of operations comprising receiving a first message, wherein the first message comprises configuration parameters associated with a user identity. The device can further comprise receiving a request to establish a communication link with at least one device associated with the user identity, and performing an alert action indicated by the configuration parameters for all devices associated with the user identity.

According to yet another embodiment, a device can comprise a processor and a memory that stores executable instructions that, when executed by the processor, facilitate performance of operations comprising receiving, configuration parameters for devices associated with a user identity wherein the configuration parameters comprise an equipment type, a time period and an action type that indicates an action to execute for incoming communication requests associated with the user identity. The device can further comprise transmitting the configuration parameters to one or more network node.

These and other embodiments or implementations are described in more detail below with reference to the drawings. Repetitive description of like elements employed in the figures and other embodiments described herein is omitted for sake of brevity.

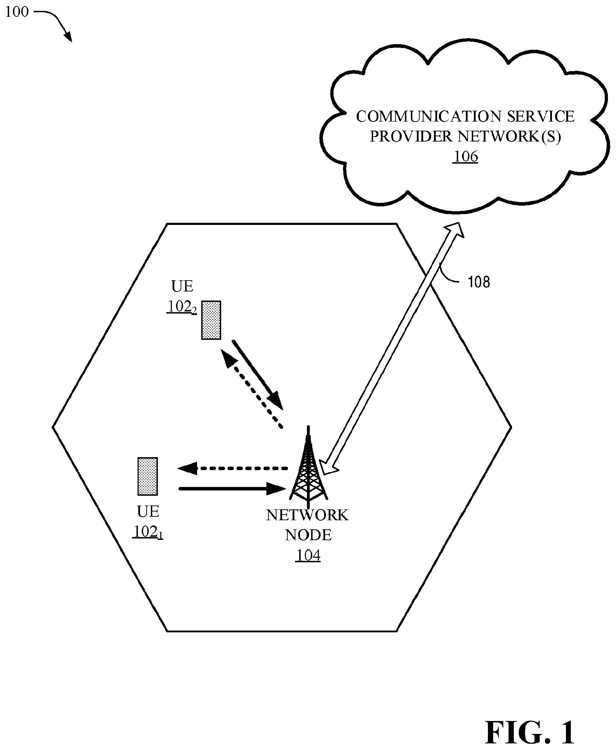

FIG. 1 illustrates a non-limiting example of a wireless communication system 100 in accordance with various aspects and embodiments of the subject disclosure. In one or more embodiments, system 100 can comprise one or more user equipment UEs 102. The non-limiting term user equipment can refer to any type of device that can communicate with a network node in a cellular or mobile communication system. A UE can have one or more antenna panels having vertical and horizontal elements. Examples of a UE comprise a target device, device to device (D2D) UE, machine type UE or UE capable of machine to machine (M2M) communications, personal digital assistant (PDA), tablet, mobile terminals, smart phone, laptop mounted equipment (LME), universal serial bus (USB) dongles enabled for mobile communications, a computer having mobile capabilities, a mobile device such as cellular phone, a laptop having laptop embedded equipment (LEE, such as a mobile broadband adapter), a tablet computer having a mobile broadband adapter, a wearable device, a virtual reality (VR) device, a heads-up display (HUD) device, a smart car, a machine-type communication (MTC) device, set-top box, voice assistant, and the like. User equipment UE 102 can also comprise IOT devices that communicate wirelessly.

In various embodiments, system 100 is or comprises a wireless communication network serviced by one or more wireless communication network providers. In example embodiments, a UE 102 can be communicatively coupled to the wireless communication network via a network node 104. The network node (e.g., network node device) can communicate with user equipment (UE), thus providing connectivity between the UE and the wider cellular network. The UE 102 can send transmission type recommendation data to the network node 104. The transmission type recommendation data can comprise a recommendation to transmit data via a closed loop MIMO mode and/or a rank-1 precoder mode.

A network node can have a cabinet and other protected enclosure, an antenna mast, and multiple antennas for performing various transmission operations (e.g., MIMO operations). Network nodes can serve several cells, also called sectors, depending on the configuration and type of antenna. In example embodiments, the UE 102 can send and/or receive communication data via a wireless link to the network node 104. The dashed arrow lines from the network node 104 to the UE 102 represent downlink (DL) communications and the solid arrow lines from the UE 102 to the network nodes 104 represents an uplink (UL) communication.

System 100 can further include one or more communication service provider networks 106 that facilitate providing wireless communication services to various UEs, including UE 102, via the network node 104 and/or various additional network devices (not shown) included in the one or more communication service provider networks 106. The one or more communication service provider networks 106 can include various types of disparate networks, including but not limited to: cellular networks, femto networks, picocell networks, microcell networks, internet protocol (IP) networks Wi-Fi service networks, broadband service network, enterprise networks, cloud-based networks, millimeter wave networks and the like. For example, in at least one implementation, system 100 can be or include a large-scale wireless communication network that spans various geographic areas. According to this implementation, the one or more communication service provider networks 106 can be or include the wireless communication network and/or various additional devices and components of the wireless communication network (e.g., additional network devices and cell, additional UEs, network server devices, etc.). The network node 104 can be connected to the one or more communication service provider networks 106 via one or more backhaul links 108. For example, the one or more backhaul links 108 can comprise wired link components, such as a T1/E1 phone line, a digital subscriber line (DSL) (e.g., either synchronous or asynchronous), an asymmetric DSL (ADSL), an optical fiber backbone, a coaxial cable, and the like. The one or more backhaul links 108 can also include wireless link components, such as but not limited to, line-of-sight (LOS) or non-LOS links which can include terrestrial air-interfaces or deep space links (e.g., satellite communication links for navigation).

Wireless communication system 100 can employ various cellular systems, technologies, and modulation modes to facilitate wireless radio communications between devices (e.g., the UE 102 and the network node 104). While example embodiments might be described for 5G (NR) systems, the embodiments can be applicable to any radio access technology (RAT) or multi-RAT system where the UE operates using multiple carriers e.g. LTE FDD/TDD, GSM/GERAN, CDMA2000 etc.

For example, system 100 can operate in accordance with global system for mobile communications (GSM), universal mobile telecommunications service (UMTS), long term evolution (LTE), LTE frequency division duplexing (LTE FDD, LTE time division duplexing (TDD), high speed packet access (HSPA), code division multiple access (CDMA), wideband CDMA (WCMDA), CDMA2000, time division multiple access (TDMA), frequency division multiple access (FDMA), multi-carrier code division multiple access (MC-CDMA), single-carrier code division multiple access (SC-CDMA), single-carrier FDMA (SC-FDMA), orthogonal frequency division multiplexing (OFDM), discrete Fourier transform spread OFDM (DFT-spread OFDM) single carrier FDMA (SC-FDMA), Filter bank based multi-carrier (FBMC), zero tail DFT-spread-OFDM (ZT DFT-s-OFDM), generalized frequency division multiplexing (GFDM), fixed mobile convergence (FMC), universal fixed mobile convergence (UFMC), unique word OFDM (UW-OFDM), unique word DFT-spread OFDM (UW DFT-Spread-OFDM), cyclic prefix OFDM CP-OFDM, resource-block-filtered OFDM, Wi Fi, WLAN, WiMax, and the like. However, various features and functionalities of system 100 are particularly described wherein the devices (e.g., the UEs 102 and the network device 104) of system 100 are configured to communicate wireless signals using one or more multi carrier modulation schemes, wherein data symbols can be transmitted simultaneously over multiple frequency subcarriers (e.g., OFDM, CP-OFDM, DFT-spread OFMD, UFMC, FMBC, etc.). The embodiments are applicable to single carrier as well as to multicarrier (MC) or carrier aggregation (CA) operation of the UE. The term carrier aggregation (CA) is also called (e.g. interchangeably called) "multi-carrier system", "multi-cell operation", "multi-carrier operation", "multi-carrier" transmission and/or reception. Note that some embodiments are also applicable for Multi RAB (radio bearers) on some carriers (that is data plus speech is simultaneously scheduled).

In various embodiments, system 100 can be configured to provide and employ 5G wireless networking features and functionalities. 5G wireless communication networks are expected to fulfill the demand of exponentially increasing data traffic and to allow people and machines to enjoy gigabit data rates with virtually zero latency. Compared to 4G, 5G supports more diverse traffic scenarios. For example, in addition to the various types of data communication between conventional UEs (e.g., phones, smartphones, tablets, PCs, televisions, Internet enabled televisions, etc.) supported by 4G networks, 5G networks can be employed to support data communication between smart cars in association with driverless car environments, as well as machine type communications (MTCs). Considering the drastic different communication needs of these different traffic scenarios, the ability to dynamically configure waveform parameters based on traffic scenarios while retaining the benefits of multi carrier modulation schemes (e.g., OFDM and related schemes) can provide a significant contribution to the high speed/capacity and low latency demands of 5G networks. With waveforms that split the bandwidth into several sub-bands, different types of services can be accommodated in different sub-bands with the most suitable waveform and numerology, leading to an improved spectrum utilization for 5G networks.

To meet the demand for data centric applications, features of proposed 5G networks may comprise: increased peak bit rate (e.g., 20Gbps), larger data volume per unit area (e.g., high system spectral efficiency - for example about 3.5 times that of spectral efficiency of long term evolution (LTE) systems), high capacity that allows more device connectivity both concurrently and instantaneously, lower battery/power consumption (which reduces energy and consumption costs), better connectivity regardless of the geographic region in which a user is located, a larger numbers of devices, lower infrastructural development costs, and higher reliability of the communications. Thus, 5G networks may allow for: data rates of several tens of megabits per second should be supported for tens of thousands of users, 1 gigabit per second to be offered simultaneously to tens of workers on the same office floor, for example; several hundreds of thousands of simultaneous connections to be supported for massive sensor deployments; improved coverage, enhanced signaling efficiency; reduced latency compared to LTE.

The upcoming 5G access network may utilize higher frequencies (e.g., > 6GHz) to aid in increasing capacity. Currently, much of the millimeter wave (mmWave) spectrum, the band of spectrum between 30GHz and 300GHz is underutilized. The millimeter waves have shorter wavelengths that range from 10 millimeters to 1 millimeter, and these 9Wave signals experience severe path loss, penetration loss, and fading. However, the shorter wavelength at 9Wave frequencies also allows more antennas to be packed in the same physical dimension, which allows for large-scale spatial multiplexing and highly directional beamforming.

Performance can be improved if both the transmitter and the receiver are equipped with multiple antennas. Multi-antenna techniques can significantly increase the data rates and reliability of a wireless communication system. The use of multiple input multiple output (MIMO) techniques, which was introduced in the third-generation partnership project (3GPP) and has been in use (including with LTE), is a multi-antenna technique that can improve the spectral efficiency of transmissions, thereby significantly boosting the overall data carrying capacity of wireless systems. The use of multiple-input multiple-output (MIMO) techniques can improve 9Wave communications and has been widely recognized a potentially important component for access networks operating in higher frequencies. MIMO can be used for achieving diversity gain, spatial multiplexing gain and beamforming gain. For these reasons, MIMO systems are an important part of the 3rd and 4th generation wireless systems and are planned for use in 5G systems.

In LTE, LTE-5G or LTE new radio (NR), to locate a UE geographically, there are several approaches network or UE can utilize. One is to use some form of terrestrial radio location based on measurements made by a UE of signals transmitted by wireless network base stations and/or based on measurements made by network elements (e.g., base stations) of signals transmitted by the UE. Another approach is to use a Global Positioning System (GPS) receiver or Global Navigation Satellite System (GNSS) receiver built into the UE itself.

When user has many devices (e.g., smartphone, tablet, smartwatch, etc.), the user can make a decision on when and under what conditions should an incoming communication be delivered to one or more of the devices. When a user is out jogging, the user requests the network, via providing rules for delivery (e.g., configuration parameters) to the one or more network nodes of the network, not to deliver a voice call. Instead the user may request that only textual messages gets delivered. Below describes possible functionality in a device, a UE, when there is detection by that device that Public User ID may or may not receive a media type (voice, text, or audio). This detection could be a menu item on a screen being selected, a button pushed, touched, turned to a specific position (e.g. crown on a watch being set to a 2^{nd} position). In an embodiment, the UE sends a message to the network, wherein the message could contain an identity and an action to be performed by the network when that identity receives an incoming message/call /communications. More advanced devices could send more than one identity with separate actions to perform for that identity. Or there could be a single action to perform for all identities included. For example, an identity (e.g., user identity or UE identity) may be, but not limited to, Public User ID (PUI), Private User ID (Private UI), Equipment ID (EQID). A identity set may be utilized, wherein the identity set can comprise user identity, PUI, Private UI, EQID. There may be multiple of the same identity (e.g., 2 identity, 1 PUI, 2 EQID, etc.). The PUI may be MSISDN, Tel URI, SIP URI, etc. The Private UI may be IMSI, SUCI, TMSI, PTMSI, Tel URI, SIP URI etc. The EQID may be IMEI, MAC, Blue Tooth MAC etc. The EQID identifies the equipment or the hardware, SIP instance ID, SIP GR parameter, GURU or Temp GURU. An indication may comprise, but not limited to, session type, delivery option (e.g., action to be taken by the network node (NN)), a time period (e.g., a duration when the rule is in effect). The session type may be voice (e.g., audio/sound media/call), messaging (e.g., textual). In addition, but not limited to, the session may be a feature tag, ICSI, IARI, New header field or NAS information element. The delivery option is delivery type (e.g., send), do not deliver (e.g., do not disturb), send to alternative destination or device. The time period may be start time, duration or stop time. A UE according to some embodiments, can be a wireless device (UE, ME), set-top box, laptop, drone, car, wearable (e.g., watch, glasses, headset, hearing aid, any monitoring device, home base and automation devices (smart bulb, smart plug, smart socket, thermostat, etc.). The UE may be wireless utilizing one or more technologies such as, but not limited to, GERAN, UTRAN, E-UTRAN, Bluetooth, WLAN, LTE-PC5, device-2-device, Z-wave, Zigbee, DSRC, etc. Fixed or wired access technology may be Ethernet, MoCA, HomePNA, HomePlug, etc. A network may be S-CSCF, AMF or Application Server, SCC AS, TADs function, MiD-AS, etc. A UE may comprise relay UE and NN may be a network node.

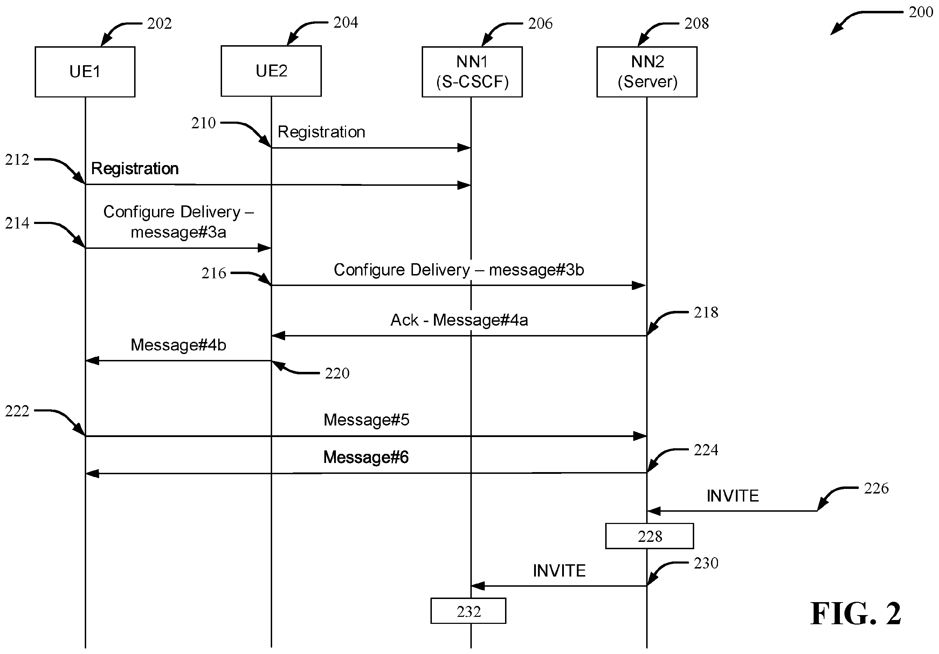

FIG. 2 illustrates a non-limiting example of information flow 200 between one or more devices communicatively operating in a wireless communication system in accordance with one or more embodiments. In non-limiting example embodiment, the UE1 202 contains at least public user ID1, private user ID1, equipment identity 1. The UE1 202 may also contain additional pubic user IDs. The UE2 204 contains at least Public User ID2, Private User ID2, equipment identity 2. The UE2 204 may also contain additional Pubic User IDs. The UE1 202 may also contain PUI from UE2 204 and the UE2 204 may contain PUI from UE1 202.

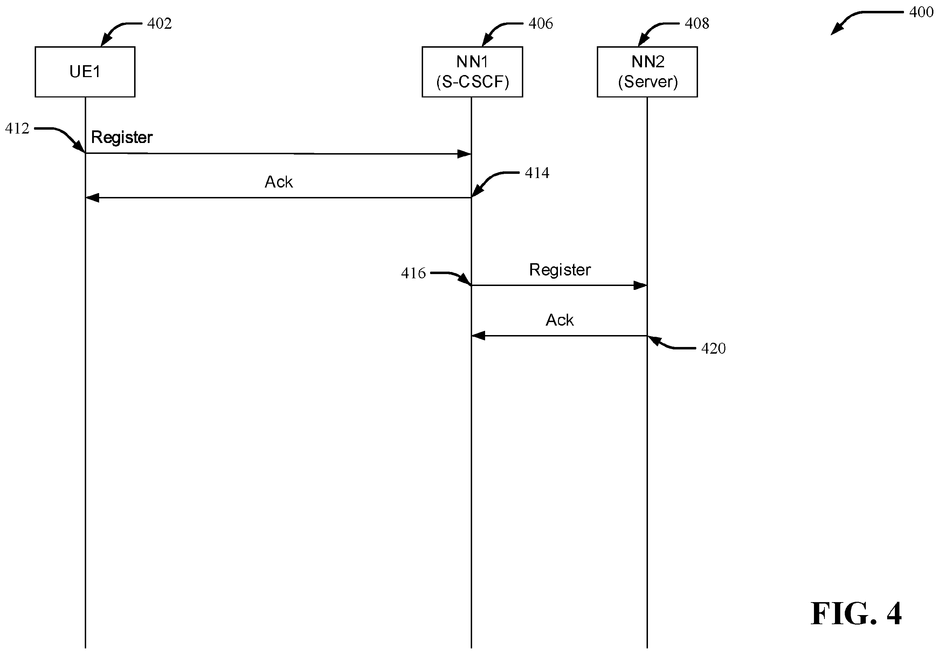

In an embodiment, the UE1 202 and UE2 204 perform a registration processor (described in FIG. 4) 212 and 210, respectively. The UE1 and UE2 may provide the respective PUI, Private ID and EQID to network node 1 (NN1) 206. In some embodiments, the registration process may comprise additional information, for example, the identity set. UE1 202 may receive configuration parameters via MMI, tactic interface, or via a menu option that provides upon necessary information such as rules for the identity, for example, but not limited to, for PUI 1 an action should be taken for a media type (e.g., do not deliver any media the device for period of time) . The UE1202 transmits delivery configuration (e.g., message#3 comprising configuration parameters, rules, actions associated with the UE1202) 214 to UE2. The Message#3b can be, but not limited to, a SIP METHOD (e.g. SIP PUBLISH, SIP REGISTRATION, SIP MESSAGE etc.), a HTTP message (e.g. HTTP PUT etc.) or other messages that comprise configuration parameters, rules and actions.

It should be noted that the UE can transmit delivery configuration directly to NN1 or NN2. UE2 receives the transmission 214 and determines if UE1 is allowed to send message#3. The UE2 transmits the message#3b 216 to NN2. The message#3 may comprise an indication 1 and 2 (e.g., for UE1 202 and UE2 204), identity set 1 and 2 (e.g., UE1 202 and UE2 204). The message structures for indication 1 and 2 can be similar. The indication may be encoded in various ways, for example, 1) g.3gpp.handling=donotdisturb, which show a media-feature tag that has a textual description of what handling should be applied to the identity set; 2) g.3gpp.dnd=tel uri:+123456, show that for Tel URI:+123456 DND (do not disturb) should be applied; 3) g.3gpp.dnd=yes, DND (do not disturb) is yes meaning for the identity set DND should be applied. Other value "no" is possible; 4) g.3gpp.dnd=voice, DND for this identity set should be applied to voice calls; 5) g.3gpp.dnd=voice, video, same as 4) but for voice and video; and 6) g.3gpp.dnd=tel uri:+123456, voice, same as 2) but for voice. Note that the above could be combined into various different combinations and just for illustrative purposes. In addition, the above are feature tags, they could equally be new SIP header, information element or encoded using XML or JSON. How message#3b is routed to NN2 could be based on one of the identities in the identity set. A new SIP header, feature tag, XML or JSON etc. could be used to encode one of the identities in the identity set for the purposes of routing, to determine the address of NN2.

Upon receiving message#3b (details described above) 216, NN2 208 stores the information in memory. The NN2 208 stores, PUIx¹ , session type, EQID, handling, timeframe, wherein the session type defines if an incoming session establish message is received, if PUIx is contained in the session establishment, then NN2 will perform the "handling" in the "timeframe" if this session is contained in the session establish message, the "handling" will be for the "EQID" associated with the PUIx, wherein EQID identify the wireless device (e.g., UE) the handling and timeframe should be applied to and the handling defines is session establish should be sent to the PUIx/EQID for the media type. The timeframe can be a time window start and stop, end time or a period of time the rule is to be applied for.

In an embodiment, NN2 208 transmits message#4a 218 to UE2 204 providing acknowledgement that either or both message#3a 214 and message#3b 216 were received. The message #4 218 may comprise identity of NN2, indication if the operation requested in message#3b 216 was successful or an error was returned. Errors may include, not authorized to perform that operation for the PUI (could be further qualified with the session type and or identity set), system is busy, message formatted erroneously, or missing data. The UE2 204 receives message#4a 218 and determines if additional steps are required. The UE2 transmits message#4b (e.g., comprising message#4a) 220 to UE1 202.

In an embodiment, the UE1 202 can transmit message#5 directly to NN2 and receive an acknowledgement message#6 224, similar to transaction described between to UE2 204 and NN2 208, described above. Upon receiving message#5 comprising preferred configuration parameters (e.g., indication, identity set, etc.), the NN2 208 stores the data in memory and apply it if request is received to establish communication link to UE1 202 or UE2 204.

The NN2 208 receives a session establish message 226 (e.g., a request to establish a communication link with at least one device associated with the user identity) containing a public user identity (e.g., identity or user identity). At process 228, upon receiving the session establish message 226, NN2 208 determines if there are 1 or more wireless devices (e.g. UEs) that can be reached using that identity. The PUI can be determined from any of but not limited to: R-URI, TO header, additional-identity header. A configuration parameter in NN2 208 could be used to state which header to use. If there are more UEs that support the PUI, then NN2 208 determines which identity (PUI) / EQID combination can be chosen. NN2 208 compares the incoming session type with any session types that have been stored against that PUI. The NN2 processes the request received and delivery configuration information stored in memory. For example, NN2 208 determines if request (e.g., alert the device or ping the device) can be processed. For example, the NN2 208 determines if actions can be performed associated with all the devices associated with an identity. NN2 208 can utilize a table that contains one or more entries for PUI (e.g., a, a, b, etc.), session type (e.g., voice, voice, audio), EQID (e.g., 1234, 4567, 3322, etc.), handling (e.g., action the NN can take - do not disturb, alert, alert) and time frame (e.g., 10-11am, 10-11am, 2-4pm). There are various ways that NN2 208 can send a message#9 230 to select a UE. For example, message#9 can contain the public user ID and EQUID of the UE, or NN2 208 can let NN1 206 to make the final decision (e.g.NN2 might not including the EQUID). In an embodiment, NN2 208 sends the message#9 230 (e.g., an INVITE) to NN1 206.

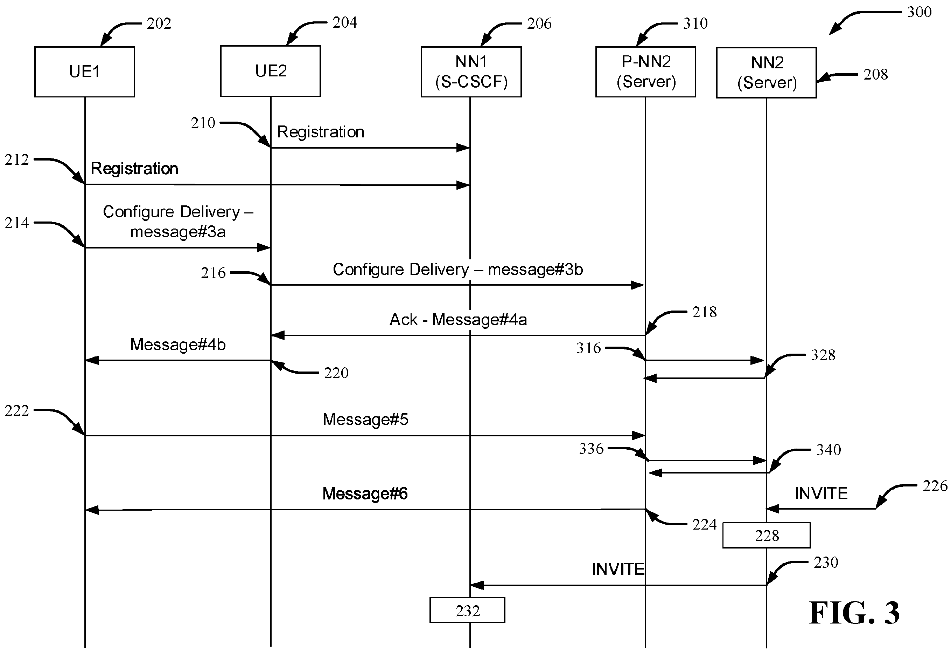

FIG. 3 illustrates a non-limiting example of information flow 300 between one or more devices communicatively operating in a wireless communication system in accordance with one or more embodiments. Repetitive description of like elements employed in the figures and other embodiments described herein is omitted for sake of brevity. In an embodiment, a proxy interworking between application servers may be utilized. For example, a proxy server P-NN2 310 in utilized. The P-NN2 310 receives message#3b and/or message#5 and based on one of the identities in the identity set determines that message#3b and/or message#5 needs to be routed to NN2 208. For example, proxy messages message#3b' 316 (associated with message#3b 216) is transmitted from P-NN2 310 to NN2 208. Similarly, proxy messages message#5b' 336 (associated with message#5b 222) is transmitted from P-NN2 310 to NN2 208. The corresponding acknowledgement messages from NN2 208, message#4' 328 (associated with message#4 218) and message#6' 340 (associated with message#6 224) are transmitted from NN2 208 to P-NN2 310. P-NN2 310 may use the domain portion of an identity in the identity set to determine which NN2 208 to route to. Before performing this operation P-NN2 310 will need to determine that the UE1 202 wanting to use the identity is allowed to perform that action. This may be configured in P-NN2 310. In an embodiment, upon receipt of the message at P-NN2 310, P-NN2 310 can examine, but not limited to the contact header, from header etc. to determine if the address in the contact header is allowed to perform the action. The action being requested could be as described in the indication.

FIG. 4 illustrates a non-limiting example of registration flow 400 between a UE and one or more network nodes that are communicatively operating in a wireless communication system in accordance with one or more embodiments. In non-limiting example embodiment, the UE1 402 registers with NN1 406 using message#R1 412. The message#R1 412 may comprise the configuration parameters that provide rules and actions (e.g., actions assigned to a media or handing information) a NN1 406 should perform according to the rules. Upon receiving message#R1 412, the NN1 406 stores the information in memory, provides an acknowledgement 414 and transmits information to NN2 408 via registration message#R2 416. The message#R2 416 may contain all the information provided in message#R1 412. Upon receiving message#R2 416, the NN1 stores the information in memory and provides an acknowledgement 420.

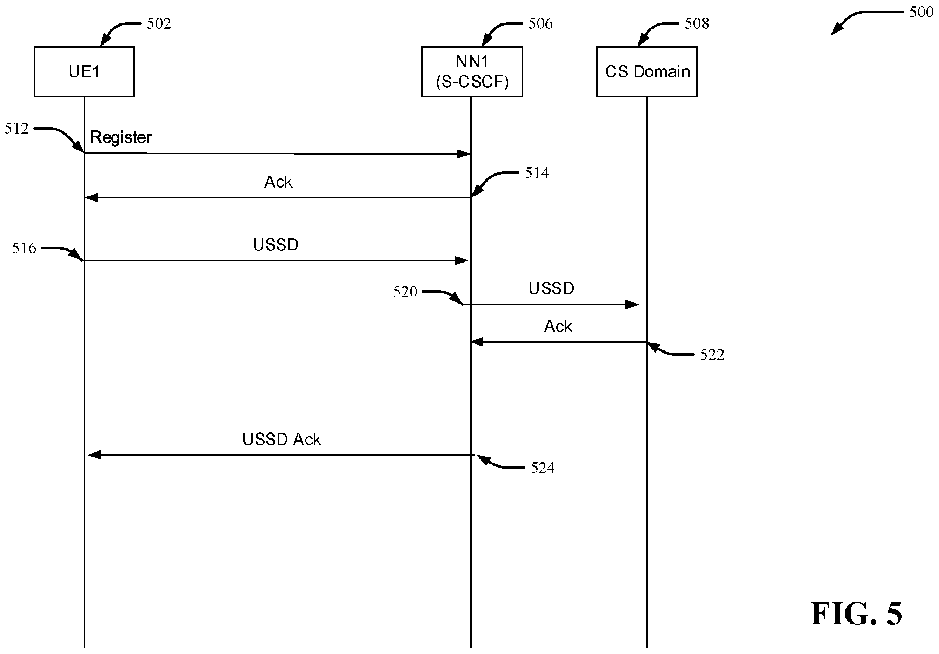

FIG. 5 illustrates a non-limiting example of registration flow 500 between a UE and one or more network nodes that are communicatively operating in a wireless communication system in accordance with one or more embodiments. As illustrated, USSD could be used to transport necessary configuration / policy information from the UE to the network. It should be noted that USSD is a term used to allow a device to send unstructured data transparently from 1^{st} point (e.g. UE) to a 2^{nd} point (e.g. HSS, HLR). One will appreciate that this ability to send data transparently could be used with other types of messages e.g. USSI (a form of USSD using IMS) or different messages could be interworked, the 1st and 2nd message containing common transparent container.

In non-limiting example embodiment, UE1 502 transmit message#1 to NN1 506. The message#1 512 may comprise the configuration parameters that provide rules and actions (e.g., actions assigned to a media or handing information) a NN1 506 should perform according to the rules. Upon receiving message#1 512, the NN1 506 stores the information in memory, provides an acknowledgement 514 to UE1 502. The UE1 502 transmits message#3 to NN1 506 comprising configuration data. The data could be encoded as alphanumeric, binary or combination. In the case of combination, the binary maybe encoded as MIME. Described herein is an example of alphanumeric encoding: *#xy, wherein xy is digit sequence that indicates to the network that the data is for but not limited to: USSD application/HSS/HLR/UDM etc.; PUx=44123456, wherein the PU is Public User IDx that starts with 44123456; PR=2338901, wherein PR is Private User ID that is 2338901; EI=11111, wherein EI is Equipment Identity that is 11111; and MT=vo, vi, wherein MT is media type and "vo" is voice and "vi" is video. The above letters and numbers are examples and not absolute, they are meant to show how alphanumeric structure can be used to convey data. The NN2 transmits message#4 516 to CS Domain 508. Message#3 516 maybe a 1st message type and Message#4 520 a second message type. The data received in message#3 516 may be sent transparently in message #4 520, some of it maybe encoded differently, or it may all be encoded differently. Some data may not be sent at all. The CS domain 508 sends an acknowledgement, message#5 522 to NN2 506. Upon receiving the message#5 522, the NN2 sends a USSD acknowledgement, message#6 524 to UE1 502.

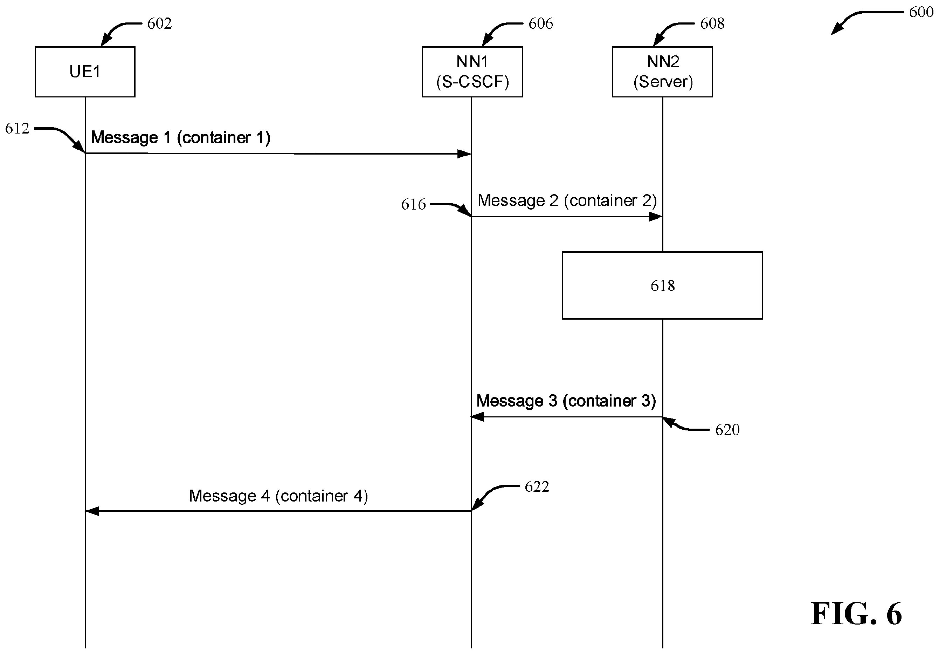

FIG. 6 illustrates a non-limiting example of registration flow 600 between a UE and one or more network nodes that are communicatively operating in a wireless communication system in accordance with one or more embodiments. In non-limiting example embodiment, the UE1 602 send a message 1 612 to NN1 606, wherein the message 1 612 comprise a container 1. The message 1 may be an uplink NAS transport message and container 1 may comprise identity, delivery options, and time period. The NN1 606 sends a message 2 616 to NN2 608, wherein the message 2 616 comprises a container 1. The message 2 616 can comprise a Nudm_ParameterProvision_Update Request, Nudm_UECM_Update request message, and/or update location message. Upon receiving message 2 616, the NN2 608 can decode on is: mark UE1 602 is unreachable; and if "delivery option" is "send to alternative destination" Action is: response with the serving node of alternative destination (UE2, not shown) when receiving query of the serving node of UE1 602. The NN2 608 sends a message 3 620 to NN1 604, wherein the message 3 620 comprise a container 2. The message 3 620 can comprise a Nudm_ParameterProvision_Update Response message, Nudm_UECM_Update response message, and/or update location acknowledgement message, and container 2 may be acknowledgement to UE1 602. The NN1 606 sends a message 4 622 to UE1 602, wherein the message 4 622 comprise a container 2. The message 4 622 can comprises a downlink NAS transport message.

In an embodiment a device can send message to the network including an identity set and an indication associated with the identity set and receive back a 2^{nd} message from the network. Wherein the sending of the 1^{st} message is trigger by receipt of a 3^{rd} message. Wherein the 3^{rd} message contains a 2^{nd} identity set and a 2^{nd} indication associated with the 2^{nd} identity set. Wherein the 1^{st} or 3^{rd} message may contain a plurality of 1^{st} or 2^{nd} identity sets, each identity set associated with an indication. Wherein the 1^{st} identity set may contain some or all of the 2^{nd} identity set. Wherein the indication may contain any of but not limited to:
Session type, Delivery options, time period etc. Wherein the session type could be but not limited to: a feature tag, ICSI, IARI, textual description etc. Wherein the textual description could be text that identifies sound media, graphical media, textual message. Wherein the 2^{nd} message contains an error, error may indicate but is not limited to: an identity is not authorized to perform that operation. Wherein some or all of the contents of the 2^{nd} message maybe sent in a 4^{th} message. The 4^{th} message being in response to the 3^{rd} message.

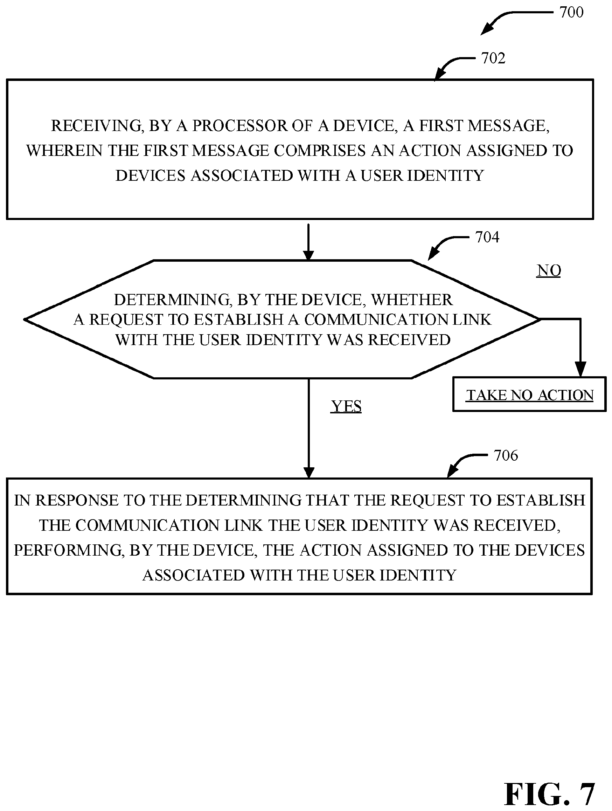

FIG. 7 depicts a diagram of an example, non-limiting computer implemented method that facilitates alerting a device that shares an identity with another device based on user configuration in accordance with one or more embodiments described herein. In some examples, flow diagram 700 can be implemented by operating environment 1600 described below. It can be appreciated that the operations of flow diagram 700 can be implemented in a different order than is depicted.

In non-limiting example embodiments, a computing device (or system) (e.g., computer 1604) is provided, the device or system comprising one or more processors and one or more memories that stores executable instructions that, when executed by the one or more processors, can facilitate performance of the operations as described herein, including the non-limiting methods as illustrated in the flow diagrams of Fig. 7.

Operation 702 depicts receiving, by a processor of a device, a first message, wherein the first message comprises an action assigned to devices associated with a user identity. Operation 704 depicts determining, by the device, whether a request to establish a communication link with the user identity was received. If the request to establish a communication link with the user identity was received, then perform operation 706. Otherwise, take no action and continue monitoring. Operation 706 depicts in response to the determining that the request to establish the communication link the user identity was received, performing, by the device, the action assigned to the devices associated with the user identity.

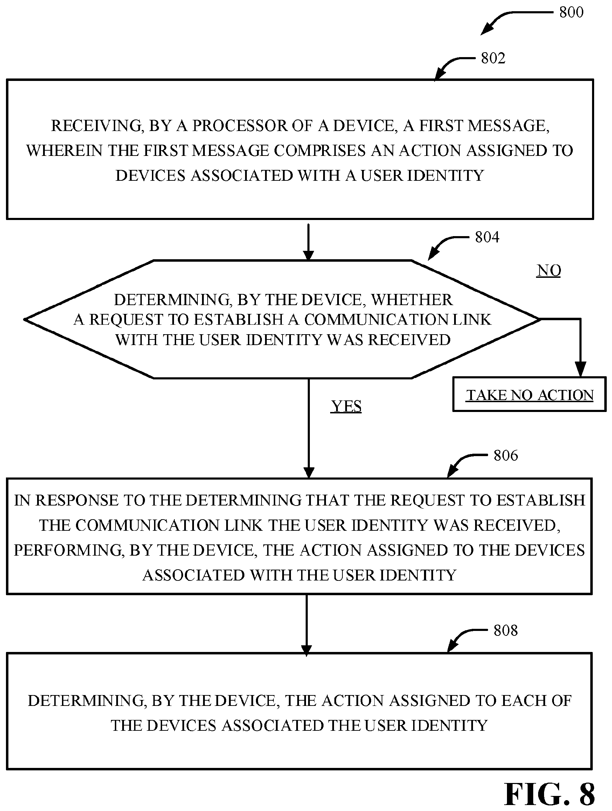

FIG. 8 depicts a diagram of an example, non-limiting computer implemented method that facilitates alerting a device that shares an identity with another device based on user configuration in accordance with one or more embodiments described herein. In some examples, flow diagram 800 can be implemented by operating environment 1600 described below. It can be appreciated that the operations of flow diagram 800 can be implemented in a different order than is depicted.

In non-limiting example embodiments, a computing device (or system) (e.g., computer 1604) is provided, the device or system comprising one or more processors and one or more memories that stores executable instructions that, when executed by the one or more processors, can facilitate performance of the operations as described herein, including the non-limiting methods as illustrated in the flow diagrams of Fig. 8.

Operation 802 depicts receiving, by a processor of a device, a first message, wherein the first message comprises an action assigned to devices associated with a user identity. Operation 804 depicts determining, by the device, whether a request to establish a communication link with the user identity was received. If the request to establish a communication link with the user identity was received, then perform operation 806. Otherwise, take no action and continue monitoring. Operation 806 depicts in response to the determining that the request to establish the communication link the user identity was received, performing, by the device, the action assigned to the devices associated with the user identity. Operation 808 depicts determining, by the device, the action assigned to each of the devices associated the user identity.

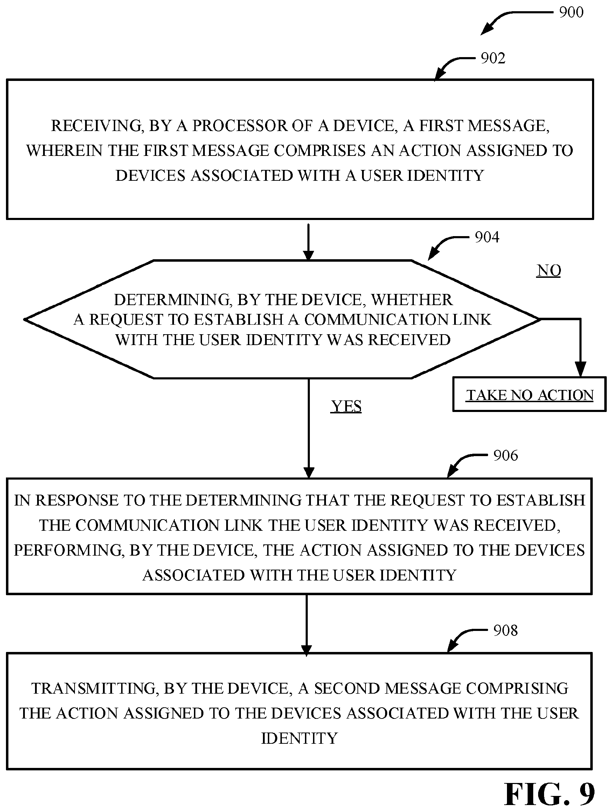

FIG. 9 depicts a diagram of an example, non-limiting computer implemented method that facilitates alerting a device that shares an identity with another device based on user configuration in accordance with one or more embodiments described herein. In some examples, flow diagram 900 can be implemented by operating environment 1600 described below. It can be appreciated that the operations of flow diagram 900 can be implemented in a different order than is depicted.

In non-limiting example embodiments, a computing device (or system) (e.g., computer 1604) is provided, the device or system comprising one or more processors and one or more memories that stores executable instructions that, when executed by the one or more processors, can facilitate performance of the operations as described herein, including the non-limiting methods as illustrated in the flow diagrams of Fig. 9.

Operation 902 depicts receiving, by a processor of a device, a first message, wherein the first message comprises an action assigned to devices associated with a user identity. Operation 904 depicts determining, by the device, whether a request to establish a communication link with the user identity was received. If the request to establish a communication link with the user identity was received, then perform operation 906. Otherwise, take no action and continue monitoring. Operation 906 depicts in response to the determining that the request to establish the communication link the user identity was received, performing, by the device, the action assigned to the devices associated with the user identity. Operation 908 depicts transmitting, by the device, a second message comprising the action assigned to the devices associated with the user identity.

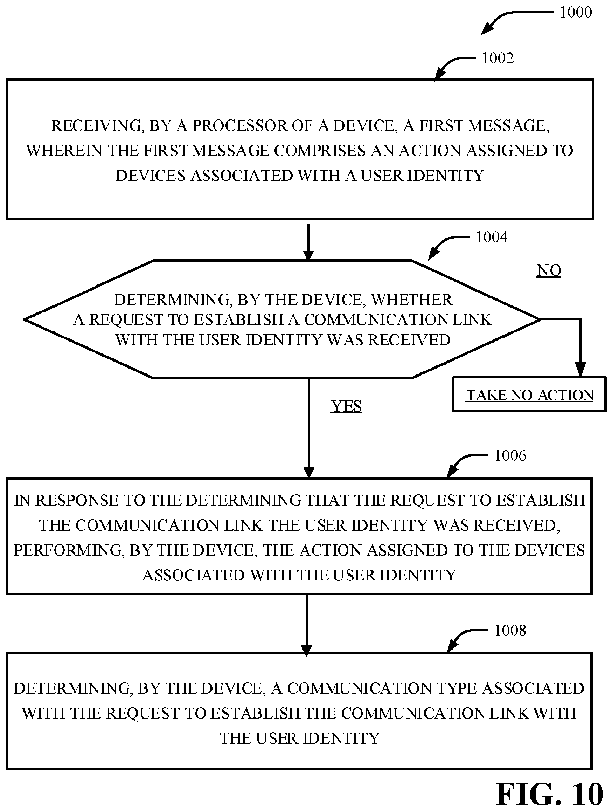

FIG. 10 depicts a diagram of an example, non-limiting computer implemented method that facilitates alerting a device that shares an identity with another device based on user configuration in accordance with one or more embodiments described herein. In some examples, flow diagram 1000 can be implemented by operating environment 1600 described below. It can be appreciated that the operations of flow diagram 1000 can be implemented in a different order than is depicted.

In non-limiting example embodiments, a computing device (or system) (e.g., computer 1604) is provided, the device or system comprising one or more processors and one or more memories that stores executable instructions that, when executed by the one or more processors, can facilitate performance of the operations as described herein, including the non-limiting methods as illustrated in the flow diagrams of Fig. 10.

Operation 1002 depicts receiving, by a processor of a device, a first message, wherein the first message comprises an action assigned to devices associated with a user identity. Operation 1004 depicts determining, by the device, whether a request to establish a communication link with the user identity was received. If the request to establish a communication link with the user identity was received, then perform operation 1006. Otherwise, take no action and continue monitoring. Operation 1006 depicts in response to the determining that the request to establish the communication link the user identity was received, performing, by the device, the action assigned to the devices associated with the user identity. Operation 1008 depicts determining, by the device, a communication type associated with the request to establish the communication link with the user identity.

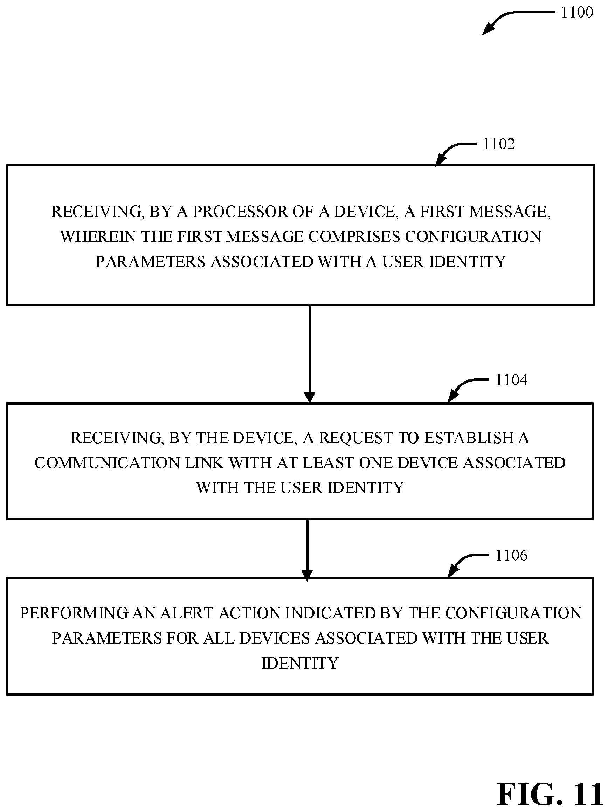

FIG. 11 depicts a diagram of an example, non-limiting computer implemented method that facilitates alerting a device that shares an identity with another device based on user configuration in accordance with one or more embodiments described herein. In some examples, flow diagram 1100 can be implemented by operating environment 1600 described below. It can be appreciated that the operations of flow diagram 1100 can be implemented in a different order than is depicted.

In non-limiting example embodiments, a computing device (or system) (e.g., computer 1604) is provided, the device or system comprising one or more processors and one or more memories that stores executable instructions that, when executed by the one or more processors, can facilitate performance of the operations as described herein, including the non-limiting methods as illustrated in the flow diagrams of Fig. 11.

Operation 1102 depicts receiving, by a processor of a device, a first message, wherein the first message comprises configuration parameters associated with a user identity. Operation 1104 depicts receiving, by the device, a request to establish a communication link with at least one device associated with the user identity. Operation 1106 depicts performing an alert action indicated by the configuration parameters for all devices associated with the user identity.

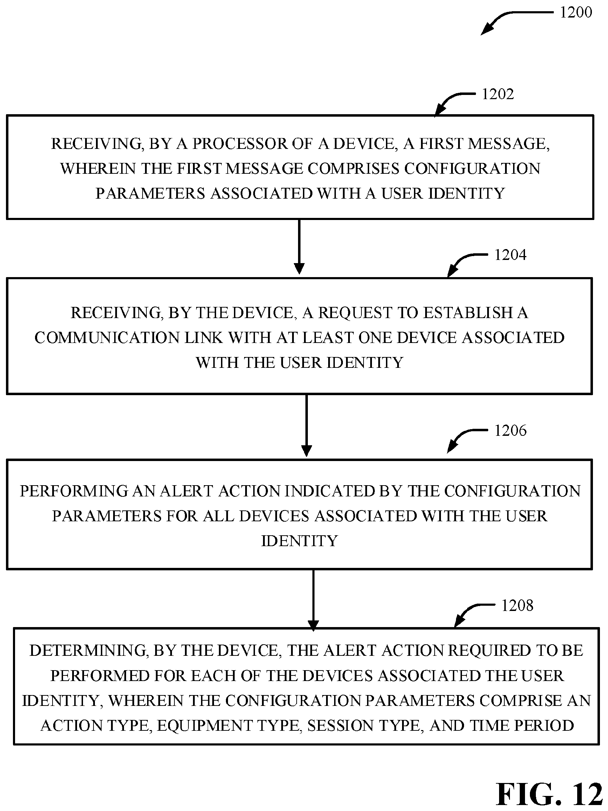

FIG. 12 depicts a diagram of an example, non-limiting computer implemented method that facilitates alerting a device that shares an identity with another device based on user configuration in accordance with one or more embodiments described herein. In some examples, flow diagram 1200 can be implemented by operating environment 1600 described below. It can be appreciated that the operations of flow diagram 1200 can be implemented in a different order than is depicted.

In non-limiting example embodiments, a computing device (or system) (e.g., computer 1604) is provided, the device or system comprising one or more processors and one or more memories that stores executable instructions that, when executed by the one or more processors, can facilitate performance of the operations as described herein, including the non-limiting methods as illustrated in the flow diagrams of Fig. 12.

Operation 1202 depicts receiving, by a processor of a device, a first message, wherein the first message comprises configuration parameters associated with a user identity. Operation 1204 depicts receiving, by the device, a request to establish a communication link with at least one device associated with the user identity. Operation 1206 depicts performing an alert action indicated by the configuration parameters for all devices associated with the user identity. Operation 1208 depicts determining, by the device, the alert action required to be performed for each of the devices associated the user identity, wherein the configuration parameters comprise an action type, equipment type, session type, and time period.

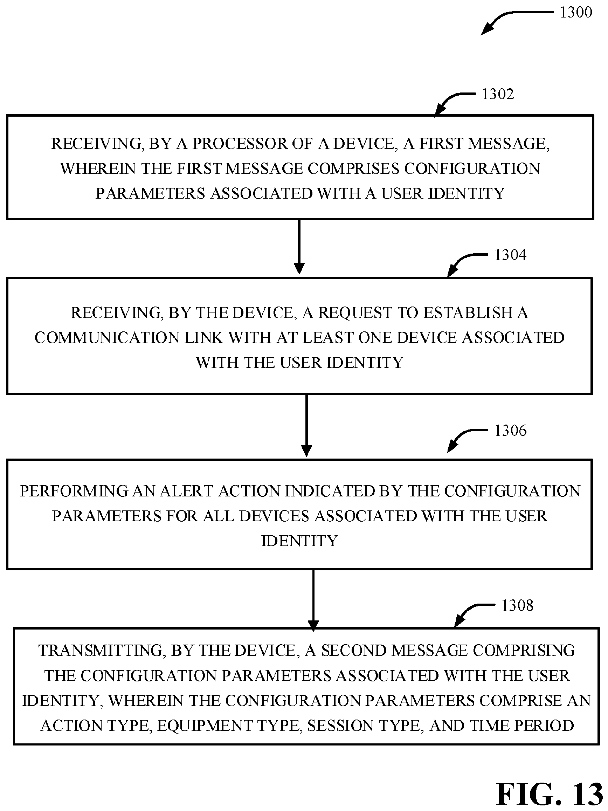

FIG. 13 depicts a diagram of an example, non-limiting computer implemented method that facilitates alerting a device that shares an identity with another device based on user configuration in accordance with one or more embodiments described herein. In some examples, flow diagram 1300 can be implemented by operating environment 1600 described below. It can be appreciated that the operations of flow diagram 1300 can be implemented in a different order than is depicted.

In non-limiting example embodiments, a computing device (or system) (e.g., computer 1604) is provided, the device or system comprising one or more processors and one or more memories that stores executable instructions that, when executed by the one or more processors, can facilitate performance of the operations as described herein, including the non-limiting methods as illustrated in the flow diagrams of Fig. 13.

Operation 1302 depicts receiving, by a processor of a device, a first message, wherein the first message comprises configuration parameters associated with a user identity. Operation 1304 depicts receiving, by the device, a request to establish a communication link with at least one device associated with the user identity. Operation 1306 depicts performing an alert action indicated by the configuration parameters for all devices associated with the user identity. Operation 1308 depicts transmitting, by the device, a second message comprising the configuration parameters associated with the user identity, wherein the configuration parameters comprise an action type, equipment type, session type, and time period.

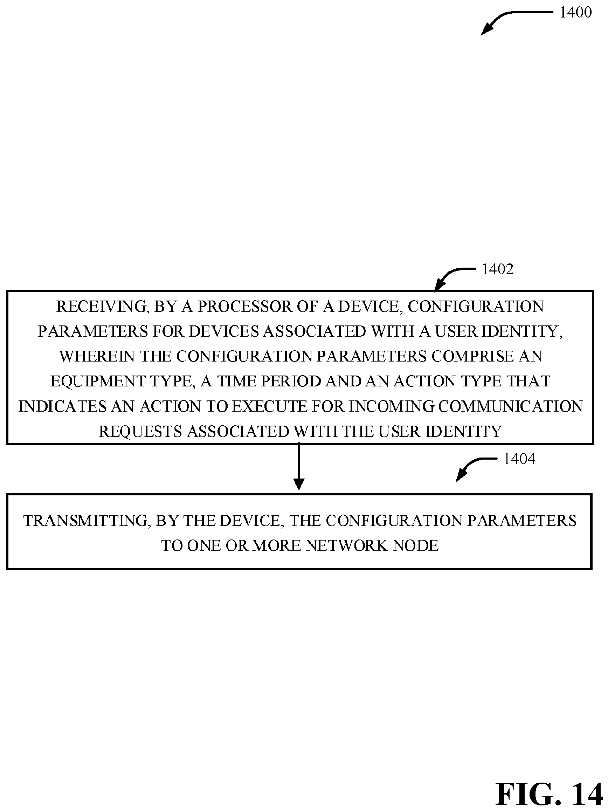

FIG. 14 depicts a diagram of an example, non-limiting computer implemented method that facilitates alerting a device that shares an identity with another device based on user configuration in accordance with one or more embodiments described herein. In some examples, flow diagram 1400 can be implemented by operating environment 1600 described below. It can be appreciated that the operations of flow diagram 1400 can be implemented in a different order than is depicted.

In non-limiting example embodiments, a computing device (or system) (e.g., computer 1502) is provided, the device or system comprising one or more processors and one or more memories that stores executable instructions that, when executed by the one or more processors, can facilitate performance of the operations as described herein, including the non-limiting methods as illustrated in the flow diagrams of Fig. 14.

Operation 1402 depicts receiving, by a processor of a device, configuration parameters for devices associated with a user identity, wherein the configuration parameters comprise an equipment type, a time period and an action type that indicates an action to execute for incoming communication requests associated with the user identity. Operation 1404 depicts transmitting, by the device, the configuration parameters to one or more network node.

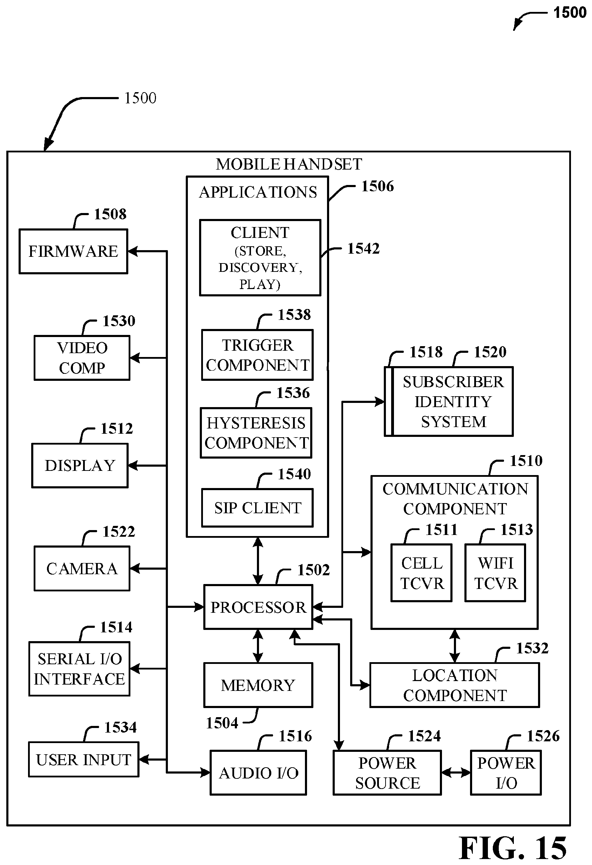

Referring now to FIG. 15, illustrated is an example block diagram of an example mobile handset 1500 operable to engage in a system architecture that facilitates wireless communications according to one or more embodiments described herein. Although a mobile handset is illustrated herein, it will be understood that other devices can be a mobile device, and that the mobile handset is merely illustrated to provide context for the embodiments of the various embodiments described herein. The following discussion is intended to provide a brief, general description of an example of a suitable environment in which the various embodiments can be implemented. While the description includes a general context of computer-executable instructions embodied on a machine-readable storage medium, those skilled in the art will recognize that the innovation also can be implemented in combination with other program modules and/or as a combination of hardware and software.

Generally, applications (e.g., program modules) can include routines, programs, components, data structures, etc., that perform particular tasks or implement particular abstract data types. Moreover, those skilled in the art will appreciate that the methods described herein can be practiced with other system configurations, including single-processor or multiprocessor systems, minicomputers, mainframe computers, as well as personal computers, hand-held computing devices, microprocessor-based or programmable consumer electronics, and the like, each of which can be operatively coupled to one or more associated devices.

A computing device can typically include a variety of machine-readable media. Machine-readable media can be any available media that can be accessed by the computer and includes both volatile and non-volatile media, removable and non-removable media. By way of example and not limitation, computer-readable media can comprise computer storage media and communication media. Computer storage media can include volatile and/or non-volatile media, removable and/or non-removable media implemented in any method or technology for storage of information, such as computer-readable instructions, data structures, program modules, or other data. Computer storage media can include, but is not limited to, RAM, ROM, EEPROM, flash memory or other memory technology, CD ROM, digital video disk (DVD) or other optical disk storage, magnetic cassettes, magnetic tape, magnetic disk storage or other magnetic storage devices, or any other medium which can be used to store the desired information and which can be accessed by the computer.

Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

The handset includes a processor 1502 for controlling and processing all onboard operations and functions. A memory 1504 interfaces to the processor 1502 for storage of data and one or more applications 1506 (e.g., a video player software, user feedback component software, etc.). Other applications can include voice recognition of predetermined voice commands that facilitate initiation of the user feedback signals. The applications 1506 can be stored in the memory 1504 and/or in a firmware 1508, and executed by the processor 1502 from either or both the memory 1504 or/and the firmware 1508. The firmware 1508 can also store startup code for execution in initializing the handset 1500. A communications component 1510 interfaces to the processor 1502 to facilitate wired/wireless communication with external systems, e.g., cellular networks, VoIP networks, and so on. Here, the communications component 1510 can also include a suitable cellular transceiver 1511 (e.g., a GSM transceiver) and/or an unlicensed transceiver 1513 (e.g., Wi-Fi, WiMax) for corresponding signal communications. The handset 1500 can be a device such as a cellular telephone, a PDA with mobile communications capabilities, and messaging-centric devices. The communications component 1510 also facilitates communications reception from terrestrial radio networks (e.g., broadcast), digital satellite radio networks, and Internet-based radio services networks.

The handset 1500 includes a display 1512 for displaying text, images, video, telephony functions (e.g., a Caller ID function), setup functions, and for user input. For example, the display 1512 can also be referred to as a "screen" that can accommodate the presentation of multimedia content (e.g., music metadata, messages, wallpaper, graphics, etc.). The display 1512 can also display videos and can facilitate the generation, editing and sharing of video quotes. A serial I/O interface 1514 is provided in communication with the processor 1502 to facilitate wired and/or wireless serial communications (e.g., USB, and/or IEEE 1594) through a hardwire connection, and other serial input devices (e.g., a keyboard, keypad, and mouse). This can support updating and troubleshooting the handset 1500, for example. Audio capabilities are provided with an audio I/O component 1516, which can include a speaker for the output of audio signals related to, for example, indication that the user pressed the proper key or key combination to initiate the user feedback signal. The audio I/O component 1516 also facilitates the input of audio signals through a microphone to record data and/or telephony voice data, and for inputting voice signals for telephone conversations.

The handset 1500 can include a slot interface 1518 for accommodating a SIC (Subscriber Identity Component) in the form factor of a card Subscriber Identity Module (SIM) or universal SIM 1520, and interfacing the SIM card 1520 with the processor 1502. However, it is to be appreciated that the SIM card 1520 can be manufactured into the handset 1500, and updated by downloading data and software.

The handset 1500 can process IP data traffic through the communications component 1510 to accommodate IP traffic from an IP network such as, for example, the Internet, a corporate intranet, a home network, a person area network, etc., through an ISP or broadband cable provider. Thus, VoIP traffic can be utilized by the handset 1500 and IP-based multimedia content can be received in either an encoded or decoded format.

A video processing component 1522 (e.g., a camera) can be provided for decoding encoded multimedia content. The video processing component 1522 can aid in facilitating the generation, editing, and sharing of video quotes. The handset 1500 also includes a power source 1524 in the form of batteries and/or an AC power subsystem, which power source 1524 can interface to an external power system or charging equipment (not shown) by a power I/O component 1526.

The handset 1500 can also include a video component 1530 for processing video content received and, for recording and transmitting video content. For example, the video component 1530 can facilitate the generation, editing and sharing of video quotes. A location tracking component 1532 facilitates geographically locating the handset 1500. As described hereinabove, this can occur when the user initiates the feedback signal automatically or manually. A user input component 1534 facilitates the user initiating the quality feedback signal. The user input component 1534 can also facilitate the generation, editing and sharing of video quotes. The user input component 1534 can include such conventional input device technologies such as a keypad, keyboard, mouse, stylus pen, and/or touchscreen, for example.

Referring again to the applications 1506, a hysteresis component 1536 facilitates the analysis and processing of hysteresis data, which is utilized to determine when to associate with the access point. A software trigger component 1538 can be provided that facilitates triggering of the hysteresis component 1536 when the Wi-Fi transceiver 1513 detects the beacon of the access point. A SIP client 1540 enables the handset 1500 to support SIP protocols and register the subscriber with the SIP registrar server. The applications 1506 can also include a client 1542 that provides at least the capability of discovery, play and store of multimedia content, for example, music.

The handset 1500, as indicated above related to the communications component 1510, includes an indoor network radio transceiver 1513 (e.g., Wi-Fi transceiver). This function supports the indoor radio link, such as IEEE-802.11, for the dual-mode GSM handset 1500. The handset 1500 can accommodate at least satellite radio services through a handset that can combine wireless voice and digital radio chipsets into a single handheld device.

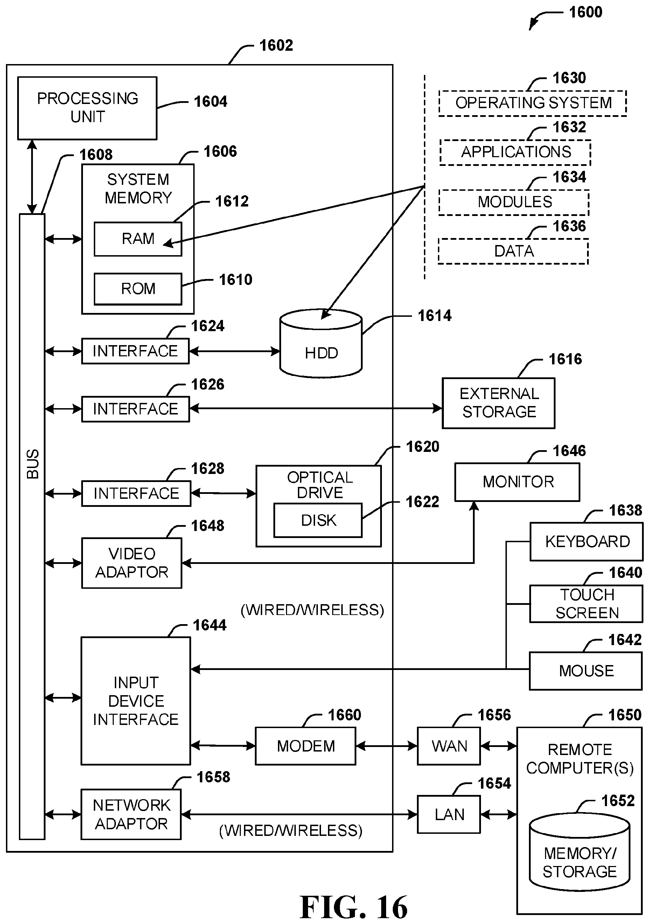

Referring now to FIG. 16, illustrated is an example block diagram of an example computer 1600 operable to engage in a system architecture that facilitates wireless communications according to one or more embodiments described herein. The computer 1600 can provide networking and communication capabilities between a wired or wireless communication network and a server and/or communication device.

In order to provide additional context for various embodiments described herein, FIG. 16 and the following discussion are intended to provide a brief, general description of a suitable computing environment 1600 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 16, the example environment 1600 for implementing various embodiments of the aspects described herein includes a computer 1602, the computer 1602 including a processing unit 1604, a system memory 1606 and a system bus 1608. The system bus 1608 couples system components including, but not limited to, the system memory 1606 to the processing unit 1604. The processing unit 1604 can be any of various commercially available processors. Dual microprocessors and other multi-processor architectures can also be employed as the processing unit 1604.

The system bus 1608 can be any of several types of bus structure that can further interconnect to a memory bus (with or without a memory controller), a peripheral bus, and a local bus using any of a variety of commercially available bus architectures. The system memory 1606 includes ROM 1610 and RAM 1612. A basic input/output system (BIOS) can be stored in a non-volatile memory such as ROM, erasable programmable read only memory (EPROM), EEPROM, which BIOS contains the basic routines that help to transfer information between elements within the computer 1602, such as during startup. The RAM 1612 can also include a high-speed RAM such as static RAM for caching data.

The computer 1602 further includes an internal hard disk drive (HDD) 1614 (e.g., EIDE, SATA), one or more external storage devices 1616 (e.g., a magnetic floppy disk drive (FDD) 1616, a memory stick or flash drive reader, a memory card reader, etc.) and an optical disk drive 1620 (e.g., which can read or write from a CD-ROM disc, a DVD, a BD, etc.). While the internal HDD 1614 is illustrated as located within the computer 1602, the internal HDD 1614 can also be configured for external use in a suitable chassis (not shown). Additionally, while not shown in environment 1600, a solid state drive (SSD) could be used in addition to, or in place of, an HDD 1614. The HDD 1614, external storage device(s) 1616 and optical disk drive 1620 can be connected to the system bus 1608 by an HDD interface 1624, an external storage interface 1626 and an optical drive interface 1628, respectively. The interface 1624 for external drive implementations can include at least one or both of Universal Serial Bus (USB) and Institute of Electrical and Electronics Engineers (IEEE) 994 interface technologies. Other external drive connection technologies are within contemplation of the embodiments described herein.

The drives and their associated computer-readable storage media provide nonvolatile storage of data, data structures, computer-executable instructions, and so forth. For the computer 1602, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1612, including an operating system 1630, one or more application programs 1632, other program modules 1634 and program data 1636. All or portions of the operating system, applications, modules, and/or data can also be cached in the RAM 1612. The systems and methods described herein can be implemented utilizing various commercially available operating systems or combinations of operating systems.

Computer 1602 can optionally comprise emulation technologies. For example, a hypervisor (not shown) or other intermediary can emulate a hardware environment for operating system 1630, and the emulated hardware can optionally be different from the hardware illustrated in FIG. 16. In such an embodiment, operating system 1630 can comprise one virtual machine (VM) of multiple VMs hosted at computer 1602. Furthermore, operating system 1630 can provide runtime environments, such as the Java runtime environment or the .NET framework, for applications 1632. Runtime environments are consistent execution environments that allow applications 1632 to run on any operating system that includes the runtime environment. Similarly, operating system 1630 can support containers, and applications 1632 can be in the form of containers, which are lightweight, standalone, executable packages of software that include, e.g., code, runtime, system tools, system libraries and settings for an application.

Further, computer 1602 can be enable with a security module, such as a trusted processing module (TPM). For instance with a TPM, boot components hash next in time boot components, and wait for a match of results to secured values, before loading a next boot component. This process can take place at any layer in the code execution stack of computer 1602, e.g., applied at the application execution level or at the operating system (OS) kernel level, thereby enabling security at any level of code execution.

A user can enter commands and information into the computer 1602 through one or more wired/wireless input devices, e.g., a keyboard 1638, a touch screen 1640, and a pointing device, such as a mouse 1642. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1604 through an input device interface 1644 that can be coupled to the system bus 1608, but can be connected by other interfaces, such as a parallel port, an IEEE 994 serial port, a game port, a USB port, an IR interface, a BLUETOOTH^{®} interface, etc.

A monitor 1646 or other type of display device can be also connected to the system bus 1608 via an interface, such as a video adapter 1648. In addition to the monitor 1646, a computer typically includes other peripheral output devices (not shown), such as speakers, printers, etc.

The computer 1602 can operate in a networked environment using logical connections via wired and/or wireless communications to one or more remote computers, such as a remote computer(s) 1650. The remote computer(s) 1650 can be a workstation, a server computer, a router, a personal computer, portable computer, microprocessor-based entertainment appliance, a peer device or other common network node, and typically includes many or all of the elements described relative to the computer 1602, although, for purposes of brevity, only a memory/storage device 1652 is illustrated. The logical connections depicted include wired/wireless connectivity to a local area network (LAN) 1654 and/or larger networks, e.g., a wide area network (WAN) 1656. Such LAN and WAN networking environments are commonplace in offices and companies, and facilitate enterprise-wide computer networks, such as intranets, all of which can connect to a global communications network, e.g., the Internet.

When used in a LAN networking environment, the computer 1602 can be connected to the local network 1654 through a wired and/or wireless communication network interface or adapter 1658. The adapter 1658 can facilitate wired or wireless communication to the LAN 1654, which can also include a wireless access point (AP) disposed thereon for communicating with the adapter 1658 in a wireless mode.

When used in a WAN networking environment, the computer 1602 can include a modem 1660 or can be connected to a communications server on the WAN 1656 via other means for establishing communications over the WAN 1656, such as by way of the Internet. The modem 1660, which can be internal or external and a wired or wireless device, can be connected to the system bus 1608 via the input device interface 1644. In a networked environment, program modules depicted relative to the computer 1602 or portions thereof, can be stored in the remote memory/storage device 1652. It will be appreciated that the network connections shown are example and other means of establishing a communications link between the computers can be used.

When used in either a LAN or WAN networking environment, the computer 1602 can access cloud storage systems or other network-based storage systems in addition to, or in place of, external storage devices 1616 as described above. Generally, a connection between the computer 1602 and a cloud storage system can be established over a LAN 1654 or WAN 1656 e.g., by the adapter 1658 or modem 1660, respectively. Upon connecting the computer 1602 to an associated cloud storage system, the external storage interface 1626 can, with the aid of the adapter 1658 and/or modem 1660, manage storage provided by the cloud storage system as it would other types of external storage. For instance, the external storage interface 1626 can be configured to provide access to cloud storage sources as if those sources were physically connected to the computer 1602.

The computer 1602 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor may also be implemented as a combination of computing processing units.

In the subject specification, terms such as "store," "storage," "data store," data storage," "database," and substantially any other information storage component relevant to operation and functionality of a component, refer to "memory components," or entities embodied in a "memory" or components comprising the memory. It will be appreciated that the memory components described herein can be either volatile memory or nonvolatile memory, or can include both volatile and nonvolatile memory.

As used in this application, the terms "component," "system," "platform," "layer," "selector," "interface," and the like are intended to refer to a computer-related entity or an entity related to an operational apparatus with one or more specific functionalities, wherein the entity can be either hardware, a combination of hardware and software, software, or software in execution. As an example, a component may be, but is not limited to being, a process running on a processor, a processor, an object, an executable, a thread of execution, a program, and/or a computer. By way of illustration and not limitation, both an application running on a server and the server can be a component. One or more components may reside within a process and/or thread of execution and a component may be localized on one computer and/or distributed between two or more computers. In addition, these components can execute from various computer readable media, device readable storage devices, or machine readable media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that confers at least in part the functionality of the electronic components.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

Moreover, terms like "user equipment (UE)," "mobile station," "mobile," subscriber station," "subscriber equipment," "access terminal," "terminal," "handset," and similar terminology, refer to a wireless device utilized by a subscriber or user of a wireless communication service to receive or convey data, control, voice, video, sound, gaming, or substantially any data-stream or signaling-stream. The foregoing terms are utilized interchangeably in the subject specification and related drawings. Likewise, the terms "access point (AP)," "base station," "NodeB," "evolved Node B (eNodeB)," "home Node B (HNB)," "home access point (HAP)," "cell device," "sector," "cell," "relay device," "node," "point," and the like, are utilized interchangeably in the subject application, and refer to a wireless network component or appliance that serves and receives data, control, voice, video, sound, gaming, or substantially any data-stream or signaling-stream to and from a set of subscriber stations or provider enabled devices. Data and signaling streams can include packetized or frame-based flows.

Additionally, the terms "core-network", "core", "core carrier network", "carrier-side", or similar terms can refer to components of a telecommunications network that typically provides some or all of aggregation, authentication, call control and switching, charging, service invocation, or gateways. Aggregation can refer to the highest level of aggregation in a service provider network wherein the next level in the hierarchy under the core nodes is the distribution networks and then the edge networks. UEs do not normally connect directly to the core networks of a large service provider but can be routed to the core by way of a switch or radio area network. Authentication can refer to determinations regarding whether the user requesting a service from the telecom network is authorized to do so within this network or not. Call control and switching can refer determinations related to the future course of a call stream across carrier equipment based on the call signal processing. Charging can be related to the collation and processing of charging data generated by various network nodes. Two common types of charging mechanisms found in present day networks can be prepaid charging and postpaid charging. Service invocation can occur based on some explicit action (e.g. call transfer) or implicitly (e.g., call waiting). It is to be noted that service "execution" may or may not be a core network functionality as third party network/nodes may take part in actual service execution. A gateway can be present in the core network to access other networks. Gateway functionality can be dependent on the type of the interface with another network.

Furthermore, the terms "user," "subscriber," "customer," "consumer," "prosumer," "agent," and the like are employed interchangeably throughout the subject specification, unless context warrants particular distinction(s) among the terms. It should be appreciated that such terms can refer to human entities or automated components (e.g., supported through artificial intelligence, as through a capacity to make inferences based on complex mathematical formalisms), that can provide simulated vision, sound recognition and so forth.

Aspects, features, or advantages of the subject matter can be exploited in substantially any, or any, wired, broadcast, wireless telecommunication, radio technology or network, or combinations thereof. Non-limiting examples of such technologies or networks include Geocast technology; broadcast technologies (e.g., sub-Hz, ELF, VLF, LF, MF, HF, VHF, UHF, SHF, THz broadcasts, etc.); Ethernet; X.25; powerline-type networking (e.g., PowerLine AV Ethernet, etc.); femto-cell technology; Wi-Fi; Worldwide Interoperability for Microwave Access (WiMAX); Enhanced General Packet Radio Service (Enhanced GPRS); Third Generation Partnership Project (3GPP or 3G) Long Term Evolution (LTE); 3GPP Universal Mobile Telecommunications System (UMTS) or 3GPP UMTS; Third Generation Partnership Project 2 (3GPP2) Ultra Mobile Broadband (UMB); High Speed Packet Access (HSPA); High Speed Downlink Packet Access (HSDPA); High Speed Uplink Packet Access (HSUPA); GSM Enhanced Data Rates for GSM Evolution (EDGE) Radio Access Network (RAN) or GERAN; UMTS Terrestrial Radio Access Network (UTRAN); or LTE Advanced.

What has been described above includes examples of systems and methods illustrative of the disclosed subject matter. It is, of course, not possible to describe every combination of components or methods herein. One of ordinary skill in the art may recognize that many further combinations and permutations of the disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

While the various embodiments are susceptible to various modifications and alternative constructions, certain illustrated implementations thereof are shown in the drawings and have been described above in detail.

In addition to the various implementations described herein, it is to be understood that other similar implementations can be used or modifications and additions can be made to the described implementation(s) for performing the same function of the corresponding implementation(s) without deviating therefrom. Still further, multiple processing chips or multiple devices can share the performance of one or more functions described herein, and similarly, storage can be effected across a plurality of devices. Accordingly, the embodiments are not to be limited to any single implementation, but rather are to be construed in breadth and scope in accordance with the appended claims.

## Claims

1. A system (1600), comprising:
a processor; and
a memory that stores executable instructions that, when executed by the processor, facilitate performance of operations, comprising:
receiving a first message, wherein the first message comprises an action assigned to devices associated with a user identity;
determining whether a request to establish a communication link with the user identity was received; and
in response to the determining that the request to establish the communication link with the user identity was received, performing the action assigned to the devices associated with the user identity;
**characterized in that**
the performing the action is based on a type of device associated with the user identity;
the devices share a same user identity,
the performing the action comprises at least one of:
delivering the request to a specific device among the devices, not delivering the request to the specific device among the devices, and delivering the request to another device among the devices;
actions assigned to at least two of the devices are different.

2. The system of claim 1, wherein the operations further comprise:
determining a communication type associated with the request to establish the communication link with the user identity.

3. A system (1600), comprising:
a processor; and
a memory that stores executable instructions that, when executed by the processor, facilitate performance of operations, comprising:
receiving a first message, wherein the first message comprises configuration parameters associated with a user identity;
receiving a request to establish a communication link with at least one device associated with the user identity; and
performing an alert action indicated by the configuration parameters for all devices associated with the user identity;
**characterized in that** the operations further comprise:
determining the alert action required to be performed for each of the devices associated the user identity, wherein the configuration parameters comprise an action type, equipment type, session type, and time period;
all the devices share a same user identity,
the action type comprises at least one of:
delivering the request to a specific device among the devices, not delivering the request to the specific device among the devices, and delivering the request to another device among the devices;
alert actions to be performed for at least two of the devices are different.

4. The system of claim 3, wherein the operations further comprise:
transmitting a second message comprising the configuration parameters associated with the user identity, wherein the configuration parameters comprise an action type, equipment type, session type, and time period.

5. A method, comprising:
receiving (702, 802, 902, 1002), by a processor of a device, a first message, wherein the first message comprises an action assigned to devices associated with a user identity;
determining (704, 804, 904, 1004), by the device, whether a request to establish a communication link with the user identity was received; and
in response to the determining that the request to establish the communication link with the user identity was received, performing (706, 806, 906, 1006), by the device, the action assigned to the devices associated with the user identity;
**characterized in that**
the performing the action is based on a type of device associated with the user identity;
the devices share a same user identity,
the performing the action comprises at least one of:
delivering the request to a specific device among the devices, not delivering the request to the specific device among the devices, and delivering the request to another device among the devices;
actions assigned to at least two of the devices are different.

6. The method of claim 5, further comprising:
determining (808), by the device, the action assigned to each of the devices associated the user identity.

7. The method of claim 5, further comprising:
transmitting (908), by the device, a second message comprising the action assigned to the devices associated with the user identity.

8. The method of claim 5, further comprising:
determining (1008), by the device, a communication type associated with the request to establish the communication link with the user identity.

9. The method of claim 5, wherein the first message comprises an equipment identification for the devices associated with the user identity.

10. A method, comprising:
receiving (1102, 1202, 1302), by a processor of a device, a first message, wherein the first message comprises configuration parameters associated with a user identity;
receiving (1104, 1204, 1304), by the device, a request to establish a communication link with at least one device associated with the user identity; and
performing (1106, 1206, 1306) an alert action indicated by the configuration parameters for all devices associated with the user identity;
**characterized in that** the method further comprises:
determining (1208), by the device, the alert action required to be performed for each of the devices associated the user identity, wherein the configuration parameters comprise an action type, equipment type, session type, and time period;
all the devices share a same user identity,
the action type comprises at least one of:
delivering the request to a specific device among the devices, not delivering the request to the specific device among the devices, and delivering the request to another device among the devices;
alert actions to be performed for at least two of the devices are different.

11. The method of claim 10, further comprising:
transmitting (1308), by the device, a second message comprising the configuration parameters associated with the user identity, wherein the configuration parameters comprise an action type, equipment type, session type, and time period.

12. A system (1600), comprising:
a processor; and
a memory that stores executable instructions that, when executed by the processor, facilitate performance of operations, comprising:
receiving, configuration parameters for devices associated with a user identity ;
**characterized in that**:
the configuration parameters comprise an equipment type, a time period and an action type that indicates an action to execute for incoming communication requests associated with the user identity; wherein the devices share a same user identity; the action type comprises at least one of:
delivering the request to a specific device among the devices, not delivering the request to the specific device among the devices, and delivering the request to another device among the devices; and the actions assigned to at least two of the devices are different; and
transmitting the configuration parameters to one or more network node.

13. A method, comprising:
receiving (1402), by a processor of a device, configuration parameters for devices associated with a user identity,
**characterized in that** the method further comprises: the configuration parameters comprise an equipment type, a time period and an action type that indicates an action to execute for incoming communication requests associated with the user identity; wherein the devices share a same user identity; the action type comprises at least one of:
delivering the request to a specific device among the devices, not delivering the request to the specific device among the devices, and delivering the request to another device among the devices; and the actions assigned to at least two of the devices are different; and
transmitting (1404), by the device, the configuration parameters to one or more network node.

14. The method of claim 13, wherein the action is determined upon the time period.

15. The method of claim 13, wherein the action is determined upon on location of the device.

## Patentansprüche

1. System (1600), umfassend:
einen Prozessor; und
einen Speicher, der ausführbare Anweisungen speichert,
die bei Ausführung durch den Prozessor die Durchführung von Vorgängen erleichtern, umfassend:
Empfangen einer ersten Nachricht, wobei die erste Nachricht eine Aktion umfasst, die Vorrichtungen zugewiesen ist, die mit einer Benutzeridentität assoziiert sind;
Bestimmen, ob eine Anforderung zum Herstellen einer Kommunikationsverbindung mit der Benutzeridentität empfangen wurde; und
als Reaktion auf das Bestimmen, dass die Anforderung zum Herstellen der Kommunikationsverbindung mit der Benutzeridentität empfangen wurde, Durchführen der Aktion, die den Vorrichtungen zugewiesen ist, die mit der Benutzeridentität assoziiert sind;
**dadurch gekennzeichnet, dass**
das Durchführen der Aktion auf einem Typ von Vorrichtung basiert, die mit der Benutzeridentität assoziiert ist;
die Vorrichtungen eine gleiche Benutzeridentität teilen, das Durchführen der Aktion mindestens eines von Folgendem umfasst:
Zustellen der Anforderung an eine spezifische Vorrichtung unter den Vorrichtungen, Nicht-Zustellen der Anforderung an die spezifische Vorrichtung unter den Vorrichtungen und Zustellen der Anforderung an eine andere Vorrichtung unter den Vorrichtungen;
Aktionen, die mindestens zwei der Vorrichtungen zugewiesen sind, unterschiedlich sind.

2. System nach Anspruch 1, wobei die Vorgänge ferner Folgendes umfassen:
Bestimmen eines Kommunikationstyps, der mit der Anforderung zum Herstellen der Kommunikationsverbindung mit der Benutzeridentität assoziiert ist.

3. System (1600), umfassend:
einen Prozessor; und
einen Speicher, der ausführbare Anweisungen speichert, die bei Ausführung durch den Prozessor die Durchführung von Vorgängen erleichtern, umfassend:
Empfangen einer ersten Nachricht, wobei die erste Nachricht Konfigurationsparameter umfasst, die mit einer Benutzeridentität assoziiert sind;
Empfangen einer Anforderung zum Herstellen einer Kommunikationsverbindung mit mindestens einer Vorrichtung, die mit der Benutzeridentität assoziiert ist; und
Durchführen einer Warnaktion, die durch die Konfigurationsparameter für alle Vorrichtungen angezeigt wird, die mit der Benutzeridentität assoziiert sind;
**dadurch gekennzeichnet, dass** die Vorgänge ferner Folgendes umfassen:
Bestimmen der Warnaktion, die für eine jede der Vorrichtungen, die mit der Benutzeridentität assoziiert sind, durchgeführt werden soll, wobei die Konfigurationsparameter einen Aktionstyp, einen Ausrüstungstyp, einen Sitzungstyp und einen Zeitraum umfassen;
alle Vorrichtungen eine gleiche Benutzeridentität teilen,
der Aktionstyp mindestens eines von Folgendem umfasst:
Zustellen der Anforderung an eine spezifische Vorrichtung unter den Vorrichtungen,
Nicht-Zustellen der Anforderung an die spezifische Vorrichtung unter den Vorrichtungen und Zustellen der Anforderung an eine andere Vorrichtung unter den Vorrichtungen;
Warnaktionen, die für mindestens zwei der Vorrichtungen durchgeführt werden sollen, unterschiedlich sind.

4. System nach Anspruch 3, wobei die Vorgänge ferner Folgendes umfassen:
Übermitteln einer zweiten Nachricht, die die Konfigurationsparameter umfasst, die mit der Benutzeridentität assoziiert sind, wobei die Konfigurationsparameter einen Aktionstyp, einen Ausrüstungstyp, einen Sitzungstyp und einen Zeitraum umfassen.

5. Verfahren, umfassend:
Empfangen (702, 802, 902, 1002), durch einen Prozessor einer Vorrichtung, einer ersten Nachricht, wobei die erste Nachricht eine Aktion umfasst, die Vorrichtungen zugewiesen ist, die mit einer Benutzeridentität assoziiert sind;
Bestimmen (704, 804, 904, 1004), durch die Vorrichtung, ob eine Anforderung zum Herstellen einer Kommunikationsverbindung mit der Benutzeridentität empfangen wurde; und
als Reaktion auf das Bestimmen, dass die Anforderung zum Herstellen der Kommunikationsverbindung mit der Benutzeridentität empfangen wurde, Durchführen (706, 806, 906, 1006), durch die Vorrichtung, der Aktion, die den Vorrichtungen zugewiesen ist, die mit der Benutzeridentität assoziiert sind;
**dadurch gekennzeichnet, dass**
das Durchführen der Aktion auf einem Typ von Vorrichtung basiert, die mit der Benutzeridentität assoziiert ist;
die Vorrichtungen eine gleiche Benutzeridentität teilen, das Durchführen der Aktion mindestens eines von Folgendem umfasst:
Zustellen der Anforderung an eine spezifische Vorrichtung unter den Vorrichtungen, Nicht-Zustellen der Anforderung an die spezifische Vorrichtung unter den Vorrichtungen und Zustellen der Anforderung an eine andere Vorrichtung unter den Vorrichtungen;
Aktionen, die mindestens zwei der Vorrichtungen zugewiesen sind, unterschiedlich sind.

6. Verfahren nach Anspruch 5, ferner umfassend:
Bestimmen (808), durch die Vorrichtung, der Aktion, die einer jeden der Vorrichtungen zugewiesen ist, die mit der Benutzeridentität assoziiert sind.

7. Verfahren nach Anspruch 5, ferner umfassend:
Übermitteln (908), durch die Vorrichtung, einer zweiten Nachricht, die die Aktion umfasst, die den Vorrichtungen zugewiesen ist, die mit der Benutzeridentität assoziiert sind.

8. Verfahren nach Anspruch 5, ferner umfassend:
Bestimmen (1008), durch die Vorrichtung, eines Kommunikationstyps, der mit der Anforderung zum Herstellen der Kommunikationsverbindung mit der Benutzeridentität assoziiert ist.

9. Verfahren nach Anspruch 5, wobei die erste Nachricht eine Ausrüstungsidentifikation für die Vorrichtungen umfasst, die mit der Benutzeridentität assoziiert sind.

10. Verfahren, umfassend:
Empfangen (1102, 1202, 1302), durch einen Prozessor einer Vorrichtung, einer ersten Nachricht, wobei die erste Nachricht Konfigurationsparameter umfasst, die mit einer Benutzeridentität assoziiert sind;
Empfangen (1104, 1204, 1304), durch die Vorrichtung, einer Anforderung zum Herstellen einer Kommunikationsverbindung mit mindestens einer Vorrichtung, die mit der Benutzeridentität assoziiert ist; und
Durchführen (1106, 1206, 1306) einer Warnaktion, die durch die Konfigurationsparameter für alle Vorrichtungen angezeigt wird, die mit der Benutzeridentität assoziiert sind;
**dadurch gekennzeichnet, dass** das Verfahren ferner Folgendes umfasst:
Bestimmen (1208), durch die Vorrichtung, der Warnaktion, die für eine jede der Vorrichtungen, die mit der Benutzeridentität assoziiert sind, durchgeführt werden soll, wobei die Konfigurationsparameter einen Aktionstyp, einen Ausrüstungstyp, einen Sitzungstyp und einen Zeitraum umfassen;
alle Vorrichtungen eine gleiche Benutzeridentität teilen,
der Aktionstyp mindestens eines von Folgendem umfasst:
Zustellen der Anforderung an eine spezifische Vorrichtung unter den Vorrichtungen,
Nicht-Zustellen der Anforderung an die spezifische Vorrichtung unter den Vorrichtungen und Zustellen der Anforderung an eine andere Vorrichtung unter den Vorrichtungen;
Warnaktionen, die für mindestens zwei der Vorrichtungen durchgeführt werden sollen, unterschiedlich sind.

11. Verfahren nach Anspruch 10, ferner umfassend:
Übermitteln (1308), durch die Vorrichtung, einer zweiten Nachricht, die die Konfigurationsparameter umfasst, die mit der Benutzeridentität assoziiert sind, wobei die Konfigurationsparameter einen Aktionstyp, einen Ausrüstungstyp, einen Sitzungstyp und einen Zeitraum umfassen.

12. System (1600), umfassend:
einen Prozessor; und
einen Speicher, der ausführbare Anweisungen speichert, die bei Ausführung durch den Prozessor die Durchführung von Vorgängen erleichtern, umfassend:
Empfangen von Konfigurationsparametern für Vorrichtungen, die mit einer Benutzeridentität assoziiert sind;
**dadurch gekennzeichnet, dass**:
die Konfigurationsparameter einen Ausrüstungstyp, einen Zeitraum und einen Aktionstyp umfassen, der eine auszuführende Aktion für eingehende Kommunikationsanforderungen anzeigt, die mit der Benutzeridentität assoziiert sind; wobei die Vorrichtungen eine gleiche Benutzeridentität teilen; der Aktionstyp mindestens eines der Folgenden umfasst:
Zustellen der Anforderung an eine spezifische Vorrichtung unter den Vorrichtungen, Nicht-Zustellen der Anforderung an die spezifische Vorrichtung unter den Vorrichtungen und Zustellen der Anforderung an eine andere Vorrichtung unter den Vorrichtungen; und die Aktionen, die mindestens zwei der Vorrichtungen zugewiesen sind, unterschiedlich sind; und
Übermitteln der Konfigurationsparameter an einen oder mehrere Netzwerkknoten.

13. Verfahren, umfassend:
Empfangen (1402), durch einen Prozessor einer Vorrichtung, von Konfigurationsparametern für Vorrichtungen, die mit einer Benutzeridentität assoziiert sind,
**dadurch gekennzeichnet, dass** das Verfahren ferner Folgendes umfasst:
die Konfigurationsparameter einen Ausrüstungstyp, einen Zeitraum und einen Aktionstyp umfassen, der eine auszuführende Aktion für eingehende Kommunikationsanforderungen anzeigt, die mit der Benutzeridentität assoziiert sind; wobei die Vorrichtungen eine gleiche Benutzeridentität teilen; der Aktionstyp mindestens eines der Folgenden umfasst:
Zustellen der Anforderung an eine spezifische Vorrichtung unter den Vorrichtungen, Nicht-Zustellen der Anforderung an die spezifische Vorrichtung unter den Vorrichtungen und Zustellen der Anforderung an eine andere Vorrichtung unter den Vorrichtungen; und
die Aktionen, die mindestens zwei der Vorrichtungen zugewiesen sind, unterschiedlich sind; und
Übermitteln (1404), durch die Vorrichtung, der Konfigurationsparameter an einen oder mehrere Netzwerkknoten.

14. Verfahren nach Anspruch 13, wobei die Aktion anhand des Zeitraums bestimmt wird.

15. Verfahren nach Anspruch 13, wobei die Aktion anhand des Standorts der Vorrichtung bestimmt wird.

## Revendications

1. Système (1600), comprenant :
un processeur ; et
une mémoire qui stocke des instructions exécutables qui, lorsqu'elles sont exécutées par le processeur, facilitent la réalisation d'opérations, comprenant :
recevoir un premier message, dans lequel le premier message comprend une action attribuée à des dispositifs associés à une identité d'utilisateur ;
déterminer si une demande d'établissement d'une liaison de communication avec l'identité d'utilisateur a été reçue ; et
en réponse à la détermination selon laquelle la demande d'établissement de la liaison de communication avec l'identité d'utilisateur a été reçue, réaliser l'action attribuée aux dispositifs associés à l'identité d'utilisateur ;
**caractérisé en ce que**
la réalisation de l'action est basée sur un type de dispositif associé à l'identité d'utilisateur ;
les dispositifs partagent une même identité d'utilisateur,
la réalisation de l'action comprend au moins l'une des opérations suivantes :
fournir la demande à un dispositif spécifique parmi les dispositifs, ne pas fournir la demande au dispositif spécifique parmi les dispositifs, et fournir la demande à un autre dispositif parmi les dispositifs ;
les actions attribuées à au moins deux des dispositifs sont différentes.

2. Système selon la revendication 1, dans lequel les opérations comprennent de plus :
déterminer un type de communication associé à la demande d'établissement de la liaison de communication avec l'identité d'utilisateur.

3. Système (1600), comprenant :
un processeur ; et
une mémoire qui stocke des instructions exécutables qui, lorsqu'elles sont exécutées par le processeur, facilitent la réalisation d'opérations, comprenant :
recevoir un premier message, dans lequel le premier message comprend des paramètres de configuration associés à une identité d'utilisateur ;
recevoir une demande d'établissement d'une liaison de communication avec au moins un dispositif associé à l'identité d'utilisateur ; et
réaliser une action d'alerte indiquée par les paramètres de configuration pour tous les dispositifs associés à l'identité d'utilisateur ;
**caractérisé en ce que** les opérations comprennent en outre :
déterminer l'action d'alerte nécessaire à réaliser pour chacun des dispositifs associés à l'identité d'utilisateur, dans lequel les paramètres de configuration comprennent un type d'action, un type d'équipement, un type de session et une période de temps ;
tous les dispositifs partagent une même identité d'utilisateur,
le type d'action comprend au moins l'une des opérations suivantes :
fournir la demande à un dispositif spécifique parmi les dispositifs,
ne pas fournir la demande au dispositif spécifique parmi les dispositifs, et fournir la demande à un autre dispositif parmi les dispositifs ;
les actions d'alerte à réaliser pour au moins deux des dispositifs sont différentes.

4. Système selon la revendication 3, dans lequel les opérations comprennent de plus :
transmettre un second message comprenant les paramètres de configuration associés à l'identité d'utilisateur, dans lequel les paramètres de configuration comprennent un type d'action, un type d'équipement, un type de session et une période de temps.

5. Procédé, comprenant :
recevoir (702, 802, 902, 1002), par un processeur d'un dispositif, un premier message, dans lequel le premier message comprend une action attribuée à des dispositifs associés à une identité d'utilisateur ;
déterminer (704, 804, 904, 1004), par le dispositif, si une demande d'établissement d'une liaison de communication avec l'identité d'utilisateur a été reçue ; et
en réponse à la détermination selon laquelle la demande d'établissement de la liaison de communication avec l'identité d'utilisateur a été reçue, réaliser (706, 806, 906, 1006), par le dispositif, l'action attribuée aux dispositifs associés à l'identité d'utilisateur ;
**caractérisé en ce que**
la réalisation de l'action est basée sur un type de dispositif associé à l'identité d'utilisateur ;
les dispositifs partagent une même identité d'utilisateur,
la réalisation de l'action comprend au moins l'une des opérations suivantes :
fournir la demande à un dispositif spécifique parmi les dispositifs, ne pas fournir la demande au dispositif spécifique parmi les dispositifs, et fournir la demande à un autre dispositif parmi les dispositifs ;
les actions attribuées à au moins deux des dispositifs sont différentes.

6. Procédé selon la revendication 5, comprenant de plus :
déterminer (808), par le dispositif, l'action attribuée à chacun des dispositifs associés à l'identité d'utilisateur.

7. Procédé selon la revendication 5, comprenant de plus :
transmettre (908), par le dispositif, un second message comprenant l'action attribuée aux dispositifs associés à l'identité d'utilisateur.

8. Procédé selon la revendication 5, comprenant de plus :
déterminer (1008), par le dispositif, un type de communication associé à la demande d'établissement de la liaison de communication avec l'identité d'utilisateur.

9. Procédé selon la revendication 5, dans lequel le premier message comprend une identification d'équipement pour les dispositifs associés à l'identité d'utilisateur.

10. Procédé, comprenant :
recevoir (1102, 1202, 1302), par un processeur d'un dispositif, un premier message, dans lequel le premier message comprend des paramètres de configuration associés à une identité d'utilisateur ;
recevoir (1104, 1204, 1304), par le dispositif, une demande d'établissement d'une liaison de communication avec au moins un dispositif associé à l'identité d'utilisateur ; et
réaliser (1106, 1206, 1306) une action d'alerte indiquée par les paramètres de configuration pour tous les dispositifs associés à l'identité d'utilisateur ;
**caractérisé en ce que** le procédé comprend en outre :
déterminer (1208), par le dispositif, l'action d'alerte nécessaire à réaliser pour chacun des dispositifs associés à l'identité d'utilisateur, dans lequel les paramètres de configuration comprennent un type d'action, un type d'équipement, un type de session et une période de temps ;
tous les dispositifs partagent une même identité d'utilisateur,
le type d'action comprend au moins l'une des opérations suivantes :
fournir la demande à un dispositif spécifique parmi les dispositifs,
ne pas fournir la demande au dispositif spécifique parmi les dispositifs, et fournir la demande à un autre dispositif parmi les dispositifs ;
les actions d'alerte à réaliser pour au moins deux des dispositifs sont différentes.

11. Procédé selon la revendication 10, comprenant de plus :
transmettre (1308), par le dispositif, un second message comprenant les paramètres de configuration associés à l'identité d'utilisateur, dans lequel les paramètres de configuration comprennent un type d'action, un type d'équipement, un type de session et une période de temps.

12. Système (1600), comprenant :
un processeur ; et
une mémoire qui stocke des instructions exécutables qui, lorsqu'elles sont exécutées par le processeur, facilitent la réalisation d'opérations, comprenant :
recevoir des paramètres de configuration pour des dispositifs associés à une identité d'utilisateur ;
**caractérisé en ce que** :
les paramètres de configuration comprennent un type d'équipement, une période de temps et un type d'action qui indique une action à exécuter pour les demandes de communication entrantes associées à l'identité d'utilisateur ; dans lequel les dispositifs partagent une même identité d'utilisateur ; le type d'action comprend au moins l'une des opérations suivantes :
fournir la demande à un dispositif spécifique parmi les dispositifs, ne pas fournir la demande au dispositif spécifique parmi les dispositifs, et fournir la demande à un autre dispositif parmi les dispositifs ; et les actions attribuées à au moins deux des dispositifs sont différentes ; et
transmettre les paramètres de configuration à un ou plusieurs nœuds de réseau.

13. Procédé, comprenant :
recevoir (1402), par un processeur d'un dispositif, des paramètres de configuration pour des dispositifs associés à une identité d'utilisateur,
**caractérisé en ce que** le procédé comprend en outre :
les paramètres de configuration comprennent un type d'équipement, une période de temps et un type d'action qui indique une action à exécuter pour les demandes de communication entrantes associées à l'identité d'utilisateur ; dans lequel les dispositifs partagent une même identité d'utilisateur ; le type d'action comprend au moins l'une des opérations suivantes :
fournir la demande à un dispositif spécifique parmi les dispositifs, ne pas fournir la demande au dispositif spécifique parmi les dispositifs, et fournir la demande à un autre dispositif parmi les dispositifs ; et
les actions attribuées à au moins deux des dispositifs sont différentes ; et
transmettre (1404), par le dispositif, les paramètres de configuration à un ou plusieurs nœuds de réseau.

14. Procédé selon la revendication 13, dans lequel l'action est déterminée en fonction de la période de temps.

15. Procédé selon la revendication 13, dans lequel l'action est déterminée en fonction de l'emplacement du dispositif.
